# EUROPEAN PATENT SPECIFICATION

(11) **EP 4 200 601 B1**
(45) Date of publication and mention of the grant of the patent: **08.07.2026**
(21) Application number: 21858797.0
(22) Date of filing: 30.07.2021
(51) Int. Cl.: G01N 27/62, H01J 49/06, H01J 49/40, H01J 49/42

(54) **SYSTEMS AND METHODS FOR CAPTURING FULL RESOLUTION ION MOBILITY DATA AND PERFORMING MULTI-ANALYTE TARGETED DATA ACQUISITION**
SYSTEME UND VERFAHREN ZUR ERFASSUNG VON IONENMOBILITÄTSDATEN MIT VOLLER AUFLÖSUNG UND ZUR DURCHFÜHRUNG EINER GEZIELTEN MULTIANALYTDATENERFASSUNG
SYSTÈMES ET PROCÉDÉS DE CAPTURE DE DONNÉES DE MOBILITÉ IONIQUE À PLEINE RÉSOLUTION ET D'EXÉCUTION D'UNE ACQUISITION DE DONNÉES CIBLÉES À ANALYTES MULTIPLES

(30) Priority: 18.08.2020 US 202063066852 P
(43) Date of publication of application: 28.06.2023
(73) Proprietor: Mobilion Systems, Inc., Chadds Ford, PA 19317 (US)
(72) Inventor: DEBORD, John, Daniel, West Grove, PA 19390 (US); DENG, Liulin, Chester Springs, PA 19425 (US); CHEN, Zongyuan, Claymont, DE 19703 (US)
(74) Representative: Müller-Boré & Partner Patentanwälte PartG mbB
(86) International application number: PCT/US2021/043882
(87) International publication number: WO 2022/039905

(56) References cited:
- EP-A1- 3 185 276
- US-A1- 2015 233 866
- US-A1- 2015 233 866
- US-A1- 2016 155 621
- US-A1- 2017 102 361
- US-A1- 2019 348 268

## Description

### CROSS-REFERENCE TO RELATED APPLICATIONS

The present application claims the benefit of priority to United States Provisional Patent Application Serial No. 63/066,852 filed on August 18, 2020.

### TECHNICAL FIELD

The present disclosure relates generally to the fields of ion mobility spectrometry (IMS) and mass spectrometry (MS). More specifically, the present disclosure relates to systems and methods for capturing full resolution ion mobility data with a low acquisition rate, filter-type mass spectrometer, which is accomplished through the use of a high bandwidth acquisition system and performing multi-analyte targeted data acquisition through switching of mass-to-charge ratio detection and multi-scan analysis.

### BACKGROUND

IMS is a technique for separating and identifying ions in the gaseous phase based on their mobilities. For example, IMS can be employed to separate structural isomers and macromolecules that have different mobilities. IMS relies on applying a constant or time-varying electric field to a mixture of ions within a static or dynamic background gas. An ion having a larger mobility (or smaller collision cross section [CCS]) moves faster under the influence of the electric field compared to an ion with a smaller mobility (or larger CCS). By applying the electric field over a separation distance (e.g., in a drift tube) of an IMS device, ions from an ion mixture can be temporally or spatially separated based on their mobility. Because ions with different mobilities arrive at the end of the drift tube at different times (temporal separation) they can be identified based on the time of detection by a detector at the end of the drift tube. Resolution of the mobility separation can be varied by changing the separation distance.

MS is an analytical technique that can separate a mixture of chemical species based on their mass-to-charge ratio. MS involves ionizing the mixture of chemical species followed by acceleration of the ion mixture in the presence of electric and/or magnetic fields. In some mass spectrometers, ions having the same mass-to-charge ratio undergo the same deflection or time dependent response. Ions with different mass-to-charge ratios can undergo different deflections or time dependent response and can be identified based on the spatial or temporal position of detection by a detector (e.g., electron multiplier).

IMS combined with MS can generate an IMS-MS spectrum that can be used in a broad range of applications, including metabolomics, glycomics, and proteomics. IMS-MS ion separation can be performed by coupling an ion mobility spectrometer with a mass spectrometer. For example, an ion mobility spectrometer can first separate the ions based on their mobility. Ions having different mobilities can arrive at the mass spectrometer at different times and are then separated based on their mass-to-charge ratio. One example of an IM spectrometer are structures for lossless ion manipulations (SLIM) device that can generate an IMS spectrum with minimal ion loss. SLIM devices can use traveling wave separation as one technique to separate ions of different mobilities.

Typical mass spectrometry acquisition systems, such as triple quadrupole (QQQ) mass spectrometers, function in a pulse counting mode where the detector is set to detect ions of a specific mass-to-charge ratio over a set dwell time and sum the number of detected ions. Each set dwell time is represented by a single number corresponding to the number of ions that arrived at the detector during that dwell time. That is, the number of ions received during the dwell time are added together regardless of when during the dwell time the ions arrived at the detector. This ultimately reduces the detector's signal to a single number. Additionally, different analytes, e.g., ions having the same mass-to-charge ratio, but different mobilities, are summed together instead of being differentiated and recorded separately, which results in incomplete data being provided.

Moreover, samples analyzed by mass spectrometry systems can include a plurality of ions or analytes having different mass-to-charge ratios. However, a detector that targets a single mass-to-charge ratio or fragmentation transition will only record the ion mobility data for that single mass-to-charge ratio, and thus does not record data for the other analytes. That is, such systems do not monitor for multiple targets simultaneously. Moreover, such systems generally are not able to detect a plurality of analytes or ions from a sample that have different mass-to-charge ratios, but similar mobilities, since the detector is set to detect one specific mass-to-charge ratio.

Accordingly, there is a need for additional systems and methods for capturing full resolution ion mobility data and performing multi-analyte targeted IMS-MS data acquisition.

EP 3 185 276 A1 describes a method for acquiring fragment ion spectra of substances in complex substance mixtures, wherein a trapped ion mobility spectrometer ("TIMS") is used as the ion mobility separation device coupled to a triple quadrupole mass filter assembly.

### SUMMARY

The claimed invention is defined by the independent claims, while preferred embodiments form the subject of the dependent claims. The present disclosure relates to systems and methods for capturing full resolution ion mobility data and performing multi-analyte targeted data acquisition using a filter-type mass spectrometer.

In accordance with embodiments of the present disclosure, an exemplary system for capturing full resolution ion mobility data includes an ion mobility separation device, an ion detector, a data acquisition system, and a controller in communication with the ion mobility separation device, the ion detector, and the data acquisition system. The ion mobility separation device is configured to receive a stream of ions, guide at least a portion of the stream of ions through the ion mobility separation device and separate the ions of the portion based on ion mobility. The ion detector is configured to receive the portion of the stream of ions from the ion mobility separation device, detect ions having a predefined mass-to-charge ratio during a first time period, and generate one or more signals in response to detection of ions having the predefined mass-to-charge ratio. The data acquisition system is configured to receive the one or more signals from the ion detector and generate a time dependent ion signal based on the signals received from the ion detector, where the time dependent ion signal is representative of an intensity of the one or more signals at a plurality of different arrival time periods during the first time period.

In some aspects, the data acquisition system can be a high bandwidth data acquisition system. In such aspects, the high bandwidth data acquisition system can be an analog-to-digital converter, which can have a resolution of at least eight bits, and the one or more signals generated by the ion detector can be an analog signal.

In some other aspects, the data acquisition system can be configured to separate the first time period into a plurality of sub-periods, separately sum the received one or more signals for each of the plurality of sub-periods, and generate the time dependent ion signal based on the sums and the plurality of sub-periods. In such aspects, the data acquisition system can have a bandwidth of greater than 1 kHz.

In still other aspects, the ion mobility separation device can be configured to generate a traveling drive potential that is configured to guide the ions through the ion mobility separation device and separate the ions based on ion mobility. In other aspects, the ion mobility separation device can include an accumulation region and an ion mobility separation path. The accumulation region can be configured to accumulate the ions into one or more ion packets and pulse the one or more ion packets into the ion mobility separation path..

In accordance with embodiments of the present disclosure, an exemplary method for capturing full resolution ion mobility data is provided. The method includes introducing a stream of ions into an ion mobility separation device. The method further includes guiding, by the ion mobility separation device, at least a portion of the stream of ions through the ion mobility separation device to an ion detector. The method additionally includes separating, by the ion mobility separation device, the ions of the portion based on ion mobility. The method also includes receiving, by the ion detector, the ions and detecting, by the ion detector, ions having a predefined mass-to-charge ratio during a first time period. The method further includes generating, by the ion detector, one or more signals in response to detection of ions having the predefined mass-to-charge ratio, and receiving, by a data acquisition system, the one or more signals from the ion detector. The method also includes generating, by the data acquisition system, a time dependent ion signal based on the one or more signals received from the ion detector, which is representative of an intensity of the one or more signals at a plurality of different arrival time periods during the first time period.

In some aspects, the method includes a controller in communication with the ion mobility separation device, the ion detector, and the data acquisition system.

In some aspects, the data acquisition system can be a high bandwidth data acquisition system. In such aspects, the high bandwidth data acquisition system can be an analog-to-digital converter, which can have a resolution of at least eight bits, and the one or more signals generated by the ion detector can be an analog signal.

In other aspects, the method can comprise separating, by the data acquisition system, the first time period into a plurality of sub-periods, summing the received one or more signals for each of the plurality of sub-periods separately, and generating the time dependent ion signal based on the sums and the plurality of sub-periods. In such aspects, the data acquisition system can have a bandwidth of greater than 1 kHz.

In some other aspects, the method can comprise generating, by the ion mobility separation device, a traveling drive potential that guides the ions through the ion mobility separation device and separates the ions based on ion mobility.

In still other aspects, the ion mobility separation device can include an accumulation region and an ion mobility separation path. The accumulation region can be configured to accumulate the ions into one or more ion packets and pulse the one or more ion packets into the ion mobility separation path.

In accordance with embodiments of the present disclosure, an exemplary system for performing multi-analyte targeted data acquisition includes an ion mobility separation device, an ion detector, and a controller in communication with the ion mobility separation device and the ion detector. The ion mobility separation device is configured to receive a stream of ions, guide at least a first portion of the stream of ions through the ion mobility separation device, and separate the ions of the first portion based on ion mobility. The ion detector is configured to receive the first portion of the stream of ions from the ion mobility separation device, and perform a first scan of the received ions including detecting first ions having a first mass-to-charge ratio during a first arrival time and detecting second ions having a second mass-to-charge ratio during a second arrival time. The ion detector switches from detecting the first mass-to-charge ratio during the first arrival time of the first scan to detecting the second mass-to-charge ratio during the second arrival time of the first scan.

In some aspects, the ion mobility separation device can be configured to guide a second portion of the stream of ions through the ion mobility separation device, and separate the ions of the second portion based on ion mobility. In such aspects, the ion detector can be configured to receive the second portion of the stream of ions from the ion mobility device and perform a second scan of the received ions including detecting third ions having a third mass-to-charge ratio during the first arrival time. The ion detector can switch from detecting one of the first mass-to-charge ratio and the second mass-to-charge ratio to detecting the third mass-to-charge ratio.

In other aspects, data detected during the first scan can be combined with data detected during the second scan to form a multi-analyte data plot.

In still other aspects, the system can include a computing device storing a data set, which can include data for ions of the first portion of the stream of ions and the second portion of the stream of ions. In these aspects, the computing device can be configured to determine the first ions to be detected during the first scan, the second ions to be detected during the first scan, and the third ions to be detected during the second scan based on the data set. The data can include one or more of arrival times and mass-to-charge ratio. The computing device can be configured to group the ions into the first, second, and third scans based on the data.

In further aspects, the ion mobility separation device can include an accumulation region and an ion mobility separation path. The accumulation region can be configured to accumulate the ions into one or more ion packets and pulse the one or more ion packets into the ion mobility separation path. In such aspects, the first scan can be performed on a first packet of the one or more ion packets, and the second scan can be performed on a second packet of the one or more ion packets.

In other aspects, the ion mobility separation device can be configured to generate a traveling drive potential that is configured to guide the ions through the ion mobility separation device and separate the ions based on ion mobility.

In accordance with embodiments of the present disclosure, an exemplary method for multi-analyte targeted data acquisition is provided. The method includes introducing a stream of ions into an ion mobility separation device, guiding, by the ion mobility separation device, at least a first portion of the stream of ions through the ion mobility separation device to an ion detector, and separating, by the ion mobility separation device, the ions of the first portion based on ion mobility. The method also includes receiving, by the ion detector, the first portion of the stream of ions, and performing, by the ion detector, a first scan of the received ions including detecting first ions having a first mass-to-charge ratio during a first arrival time and detecting second ions having a second mass-to-charge ratio during a second arrival time. The ion detector switches from detecting the first mass-to-charge ratio during the first arrival time of the first scan to detecting the second mass-to-charge ratio during the second arrival time of the first scan.

In some aspects, the method can include guiding, by the ion mobility separation device, a second portion of the stream of ions through the ion mobility separation device to the ion detector, and separating, by the ion mobility separation device, the ions of the second portion based on ion mobility. Such aspects can also include receiving, by the ion detector, the second portion of the stream of ions, and performing, by the ion detector, a second scan of the received ions including detecting third ions having a third mass-to-charge ratio during the first arrival time. The ion detector can switch from detecting one of the first mass-to-charge ratio and the second mass-to-charge ratio to detecting the third mass-to-charge ratio.

In some aspects, the method can include combining data detected during the first scan with data detected during the second scan to form a multi-analyte data plot.

In some other aspects, the method can include storing, by a computing device, a data set that can include data for ions of the first portion of the stream of ions and the second portion of the stream of ions. Such methods can include determining, by the computing device, the first ions to be detected during the first scan, the second ions to be detected during the first scan, and the third ions to be detected during the second scan based on the data set. In some of these methods, the data can include one or more of arrival time and mass-to-charge ratio.

In some other aspects, the method can include grouping, by the computing device, the ions into the first, second, and third scans based on the data.

In still other aspects, the ion mobility separation device can include an accumulation region and an ion mobility separation path. The accumulation region can be configured to accumulate the ions into one or more ion packets and pulse the one or more ion packets into the ion mobility separation path. In such aspects, the first scan can be performed on a first packet of the one or more ion packets, and the second scan can be performed on a second packet of the one or more ion packets.

In some aspects, the ion mobility separation device can be configured to generate a traveling drive potential that is configured to guide the ions through the ion mobility separation device and separate the ions based on ion mobility.

Other features will become apparent from the following detailed description considered in conjunction with the accompanying drawings. It is to be understood, however, that the drawings are designed as an illustration only and not as a definition of the limits of the invention.

### BRIEF DESCRIPTION OF THE DRAWINGS

The foregoing features of the present disclosure will be apparent from the following Detailed Description of the Invention, taken in connection with the accompanying drawings, in which:
FIG. 1 is a schematic diagram of an exemplary ion mobility separation system of the present disclosure;
FIG. 2 is a schematic diagram of an exemplary IMS device of FIG. 1;
FIG. 3 is an exemplary timing diagram of the ion mobility separation system of FIG. 1;
FIG. 4A is a graph of mass-to-charge ratio (m/z) versus collision cross section (CCS) demonstrating targeted single m/z ion mobility data collection;
FIG. 4B is a graph of mass-to-charge ratio versus ion mobility demonstrating multi-analyte targeted IMS-MS data acquisition;
FIG. 5 is a graph of mass-to-charge ratio versus arrival time showing the activation time of a detector detecting ions at three different mass-to-charge ratios at three different arrival times;
FIG. 6A is a graph of mass-to-charge ratio versus arrival time showing activation times of a detector detecting ions at three different mass-to-charge ratios with two of the ions having the same arrival time;
FIG. 6B is a first portion of the graph of FIG. 6A illustrating a first scan of the detector;
FIG. 6C is a second portion of the graph of FIG. 6A illustrating a second scan of the detector;
FIG. 7 is a graph of mass-to-charge ratio versus arrival time for an exemplary glycan mixture;
FIG. 8A is a detailed view of a first portion of the graph of FIG. 7 showing the data for an arrival time range of 150 ms to 400 ms in greater detail including peak widths and groupings of data having less than a 3 ms gap between peak widths;
FIG. 8B is a detailed view of a second portion of the graph of FIG. 7 showing the data for an arrival time range of 625 ms to 975 ms in greater detail including peak widths and groupings of data having less than a 3 ms gap between peak widths;
FIG. 9A is a detailed view of a first portion of the graph of FIG. 7 showing the data for an arrival time range of 160 ms to 260 ms in greater detail and identifying the data captured by a first scan of a detector;
FIG. 9B is a detailed view of a second portion of the graph of FIG. 7 showing the data for an arrival time range of 260 ms to 400 ms in greater detail and identifying the data captured by the first scan of the detector;
FIG. 9C is a detailed view of a third portion of the graph of FIG. 7 showing the data for an arrival time range of 625 ms to 975 ms in greater detail and identifying the data captured by the first scan of the detector;
FIG. 10A is a detailed view of a first portion of the graph of FIG. 7 showing the data for an arrival time range of 160 ms to 260 ms in greater detail and identifying the data captured by a second scan of the detector;
FIG. 10B is a detailed view of a second portion of the graph of FIG. 7 showing the data for an arrival time range of 260 ms to 400 ms in greater detail and identifying the data captured by the second scan of the detector;
FIG. 10C is a detailed view of a third portion of the graph of FIG. 7 showing the data for an arrival time range of 625 ms to 975 ms in greater detail and identifying the data captured by the second scan of the detector;
FIG. 11A is a detailed view of a first portion of the graph of FIG. 7 showing the data for an arrival time range of 160 ms to 260 ms in greater detail and identifying the data captured by a third scan of the detector;
FIG. 11B is a detailed view of a second portion of the graph of FIG. 7 showing the data for an arrival time range of 260 ms to 400 ms in greater detail and identifying the data captured by the third scan of the detector;
FIG. 11C is a detailed view of a third portion of the graph of FIG. 7 showing the data for an arrival time range of 625 ms to 975 ms in greater detail and identifying the data captured by the third scan of the detector;
FIG. 12A is a detailed view of a first portion of the graph of FIG. 7 showing the data for an arrival time range of 160 ms to 260 ms in greater detail and identifying the data captured by a fourth scan of the detector;
FIG. 12B is a detailed view of a second portion of the graph of FIG. 7 showing the data for an arrival time range of 260 ms to 400 ms in greater detail and identifying the data captured by the fourth scan of the detector;
FIG. 12C is a detailed view of a third portion of the graph of FIG. 7 showing the data for an arrival time range of 625 ms to 975 ms in greater detail and identifying the data captured by the fourth scan of the detector;
FIG. 13A is a detailed view of a first portion of the graph of FIG. 7 showing the data for an arrival time range of 160 ms to 260 ms in greater detail and identifying the data captured by the first, second, third, and fourth scans of the detector shown in FIGS. 9A-C, 10A-C, 11A-C, and 12A-C;
FIG. 13B is a detailed view of a second portion of the graph of FIG. 7 showing the data for an arrival time range of 260 ms to 400 ms in greater detail and identifying the data captured by the first, second, third, and fourth scans of the detector shown in FIGS. 9A-C, 10A-C, 11A-C, and 12A-C; and
FIG. 13C is a detailed view of a third portion of the graph of FIG. 7 showing the data for an arrival time range of 625 ms to 975 ms in greater detail and identifying the data captured by the first, second, third, and fourth scans of the detector shown in FIGS. 9A-C, 10A-C, 11A-C, and 12A-C.

### DETAILED DESCRIPTION

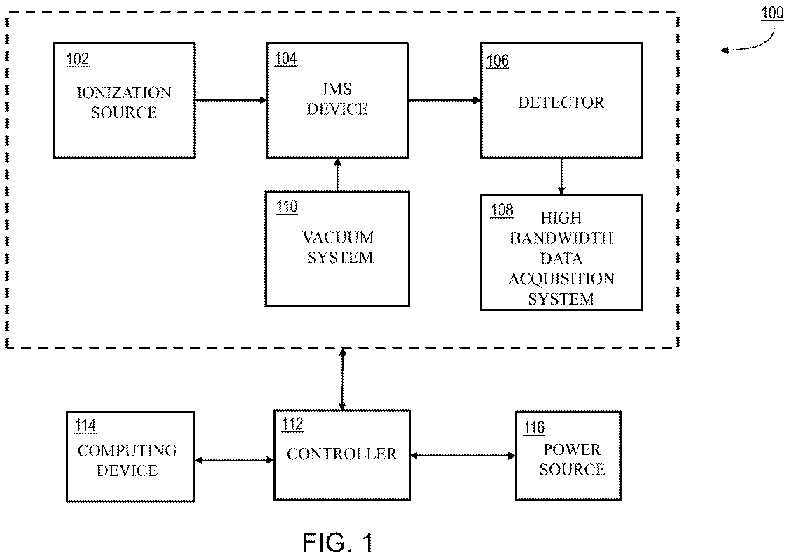

The present disclosure relates to systems and methods for filtering ions, as described in detail below in connection with FIGS. 1-13C.

Ions can be separated based on their mobility via ion mobility spectrometry (IMS). Mobility separation can be achieved, for example, by applying one or more potential waveforms (e.g., traveling potential waveforms, direct current (DC) gradient, or both) on a collection of ions. As one example, IMS based mobility separation can be achieved by structures for lossless ion manipulation (SLIM) that can systematically apply traveling and/or DC potential waveforms to a collection of ions, such as the devices disclosed and described in U.S. Patent No. 8,835,839 entitled "Method and Apparatus for Ion Mobility Separations Utilizing Alternating Current Waveforms" and U.S. Patent No. 10,317,364 entitled "Ion Manipulation Device". This can result in a continuous stream of ions that are temporally or spatially separated based on their mobility.

FIG. 1 is a schematic diagram of an exemplary ion mobility separation (IMS) system 100 in accordance with the present disclosure. The IMS system 100 includes an ionization source 102, an IMS device 104, a detector 106 (e.g., a mass spectrometer such as a triple quadrupole (QQQ) mass spectrometer, or any other filter-type mass spectrometer/analyzer), a high bandwidth data acquisition system 108, a vacuum system 110, a controller 112, a computing device 114, and a power source 116. The ionization source 102 generates ions (e.g., ions having varying mobility and mass-to-charge-ratios) and injects the ions into the IMS device 104. The IMS device 104 can be configured and operated in accordance with the SLIM devices disclosed and described in U.S. Patent Nos. 8,835,839 and 10,317,364. In particular, the IMS device 104 can be configured to transfer ions, accumulate ions, store ions, and/or separate ions, depending on the desired functionality and waveforms applied thereto. In this regard, the IMS device 104 can be used to select ions with one or more predetermined ranges of mobility and direct the selected band (or bands) of ions to the detector 106, e.g., a mass spectrometer such as a triple quadrupole (QQQ) mass spectrometer, which can be in communication with or include the high bandwidth data acquisition system 108. The high bandwidth data acquisition system 108 can be an analog or digital system that is configured to receive, monitor, and capture the time dependent ion signal of the detector 106 in order to generate a full resolution ion mobility data signal, discussed in greater detail below.

It should be understood that the IMS device 104 need not be a SLIM device, but can be any IMS device that operates via temporal separation so that ions having different mass-to-charge ratios arrive at the detector 106 at different points in time.

In one exemplary configuration, the IMS device 104 can include one or more surfaces (e.g., printed circuit board surfaces) that can have a plurality of electrodes arranged thereon. The electrodes can receive voltage signals, a voltage waveform, and/or a current waveform (e.g., a DC voltage or current, an RF voltage or current, or an AC voltage or current, or a superposition thereof), and can generate a potential (e.g., a potential gradient) to confine ions in the IMS device 104, accumulate ions in the IMS device 104, and guide ions through the IMS device 104, which can result in the accumulation and separation of ions based on their mobility. The voltage signal applied to the electrodes can be a sinusoidal waveform (e.g., an AC voltage waveform), a rectangular waveform, a DC square waveform, a sawtooth waveform, a biased sinusoidal waveform, a pulsed voltage or current waveform (which can be periodic with no polarity reversal), etc., and the amplitude of the signal provided to the electrodes can be determined based on the voltage waveform applied. The electrodes of the IMS device 104 can be individually coupled to different traveling wave control circuits, e.g., AC control circuits, DC (square wave) control circuits, pulsed current control circuits, etc., that generate voltage signals that are phase shifted with respect to each other. Alternatively, the controller 112 could be a single traveling wave control circuit that can generate voltage signals that can be simultaneously applied to all electrodes of the IMS device 104. It should be understood that the voltage or current waveform can take various forms, e.g., square, triangular, rectangular, sawtooth, etc., can be periodic, can be aperiodic, etc. For example, the controller 112 could be a traveling wave control circuit that can include one or more DC (square wave) control circuits that generate DC voltage signals and AC control circuits that generate sinusoidal signals.

The vacuum system 110 can be in fluidic communication with the IMS device 104 and regulate the gas pressure within the IMS device 104. Specifically, the vacuum system 110 can provide nitrogen to the IMS device 104 while maintaining the pressure therein at a consistent pressure.

The controller 112 can receive power from the power source 116, which can be, for example, a DC power source that provides DC voltage to the controller 112, and can be in communication with and control operation of the ionization source 102, the IMS device 104, the detector 106, the high bandwidth data acquisition system 108, and the vacuum system 110. For example, the controller 112 can control the rate of injection of ions into the IMS device 104 by the ionization source 102, the target mobility of the IMS device 104, and ion detection by the detector 106. The controller 112 can also control the characteristics and motion of potential waveforms generated by the IMS device 104 (e.g., by applying RF/AC/DC potentials to the electrodes of the IMS device 104) in order to transfer, accumulate, store, and/or separate ions. Additionally, the controller 112 can receive the full resolution ion mobility data signal generated by the high bandwidth data acquisition system 108.

The controller 112 can control the properties of the potential waveforms (e.g., amplitude, shape, frequency, etc.) by varying the properties of the applied RF/AC/DC potential (or current). In this regard, the controller 112 can vary the properties of the potential waveforms for different regions of the IMS device 104, e.g., different groupings of electrodes, to trap/accumulate ions and subsequently separate ions. This can be done in an effort to eliminate undesired ions (e.g., ions having a mobility that is not targeted), increase mobility peak resolution, increase signal-to-noise ratio, and achieve sharp separation around a targeted mobility.

In some implementations, the controller 112 can be communicatively coupled to a computing device 114. For example, the computing device 114 can provide operating parameters of the IMS system 100 via a control signal to the master control circuit. In some implementations, a user can provide the computing device 114 (e.g., via a user interface) with the operating parameters. Based on the operating parameters received via the control signal, the master control circuit can control the operation of the RF/AC/DC control circuits which in turn can determine the operation of the coupled IMS device 104. In some implementations, RF/AC/DC control circuits can be physically distributed over the IMS system 100. For example, one or more of the RF/AC/DC control circuits can be located in the IMS system 100, and the various RF/AC/DC control circuits can operate based on power from the power source 116.

The detector 106 can be a filter type detector that is configurable to detect ions of a single mass-to-charge ratio at a time, as opposed to detecting all ions at once. For example, the detector 106 can be a mass spectrometer such as a triple quadrupole (QQQ) mass spectrometer. Accordingly, the detector 106 can rely on the IMS device 104 for temporally separating ions so that ions of different mass-to-charge ratios arrive at the detector 106 at different times.

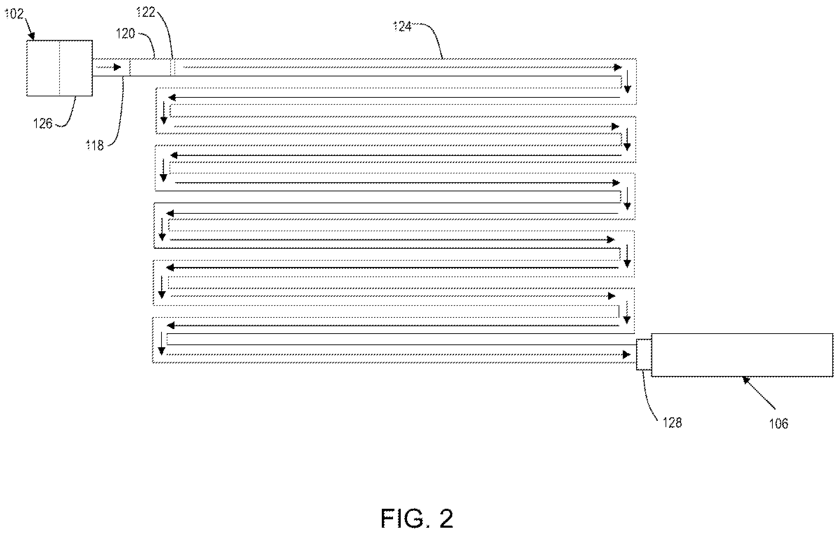

FIG. 2 is a schematic diagram of an exemplary IMS device 104 of FIG. 1. The IMS device 104 can include an inlet path 118, an accumulation region 120, a gate 122, and an ion mobility separation path 124. The ion source 102 provides ions to the inlet path 118 through interface ion optics 126, which focus the ions provided by the ion source 102. The interface ion optics 127 can be ion optics that are known in the art, for example, an ion funnel, a quadrupole ion guide, a rectangular ion funnel, traveling wave ion optics, etc. The inlet path 118 transfers the ions to the accumulation region 120, e.g., via a traveling wave.

The ions are accumulated in the accumulation region 120 and retained therein by the gate 122, which can generate a high DC potential, e.g., a DC potential that is greater than the voltage bias applied to the accumulation region 120, that prevents the ions from exiting the accumulation region 120. Ions can be accumulated in the accumulation region 120 for a predetermined time, at which point the DC potential applied to the gate 122 is lowered, thus releasing the accumulated ions into the ion mobility separation path 124. This procedure can be performed as many times as necessary such that multiple ion packets can be pulsed into the ion mobility separation path 124 by the accumulation region 120 for ion mobility separation. Ions that are pulsed into the ion mobility separation path 124 are separated based on mobility, e.g., separated in time, as they are urged through the ion mobility separation path 124, e.g., via a traveling wave that is applied to and generated by electrodes of the ion mobility separation path 124. The ion mobility separation path 124 can be, for example, 13 meters in length in order to sufficiently separate the ions based on mobility. The ion mobility separation path 124 transfers the ions through an ion guide 128 and to the detector 106, which can be configured to detect ions of a single mass-to-charge ratio during a specific or fixed period of time, e.g., a dwell time. The detector 106 integrates the number of pulses occurring during the dwell time, which represents the number of ions having the desired mass-to-charge ratio that have arrived at the detector 106 during the dwell time. Thus, the system 100 filters the ions based on both mobility and mass-to-charge ratio.

It should be understood that the ion mobility separation path 124 can be constructed and function in accordance with the SLIM devices shown and described in U.S. Patent Nos. 8,835,839 and 10,317,364. In particular, the ion mobility separation path 124 can include first and second parallel surfaces that include a plurality of electrodes thereon, which are configured to receive electrical signals from the controller 112 in order to maintain ions on the paths, transfer the ions along the paths, and separate the ions based on mobility. However, it should also be understood that the ion mobility separation path 124 can be alternatively constructed and configured in accordance with other IMS devices known in the art that perform temporal separation of ions.

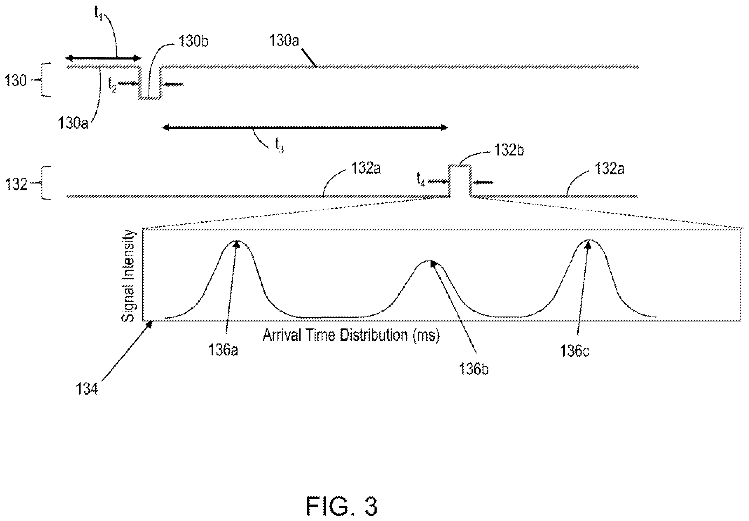

FIG. 3 is an exemplary timing diagram of the ion mobility system 100 of FIGS. 1 and 2. A first timing signal 130 represents the state of the gate 122, with a high state 130a indicating that the gate 122 is receiving and generating a high DC potential, thus preventing ions from exiting the accumulation region 120 and entering the ion mobility separation path 124, and a low state 130b indicating that the gate 122 is receiving and generating a low DC potential, thus permitting ions to exit the accumulation region 120 and enter the ion mobility separation path 124. A first time period t₁ corresponds to the time in which the first timing signal 130 is in the high state 130a, and represents a fill time or trap time for the accumulation region 134 in which ions are being trapped in the accumulation region 120 by the gate 122 and accumulating. That is, the first time period t₁ represents the time period for which ions are being accumulated by the accumulation region 120. A second time period t₂ represents the time for which the gate 122 permits ions to exit the accumulation region 134 and enter the ion mobility separation path 124, e.g., the time that the gate 122 is in the low state 130b, and is referred to as the release time, e.g., the time period for which the accumulation region 120 is releasing ions into the ion mobility separation path 124.

A second timing signal 132 represents the state of the detector 106, with a low signal 132a indicating that the detector 106 is not active and a high signal 132b indicating that the detector 106 is active and detecting ions that are arriving at the detector 106 and have the desired mass-to-charge ratio, e.g., the mass-to-charge ratio that the detector 106 is configured to detect. A third time period t₃ represents the arrival time of ions, which is the time it takes for the ions to traverse the ion mobility separation path 124 and arrive at the detector 106. A fourth time period t₄ represents the time that the detector 106 is active and counting pulses/ions, generally referred to as the dwell time. A typical dwell time for a QQQ mass spectrometer can be between 1-1,000 ms, for example.

In a standard detector operating in a "pulse counting" mode, the number of pulses occurring at the detector during the dwell time are summed, which represents the number of ions having the correct arrival time and the correct mass-to-charge ratio that have arrived at the detector. However, the detector, when operating in the foregoing "pulse counting" mode, does not monitor or capture the time dependent ion signal, but instead sums all ions detected during the dwell time regardless of the specific arrival time within the dwell time. This methodology ignores that ions having different arrival times may be present during the same dwell time and summed together, which may be the case for isomers that are compounds having the same mass-to-charge ratio, but different sizes and/or shapes, which can cause them to have slightly different arrival times. Additionally, this methodology does not provide the actual ion mobility peak position and shape, thus reducing the information content available from the signal generated by the detector.

The foregoing is illustrated by the exemplary full resolution ion mobility data graph 134 shown in FIG. 3, which is an exemplary graph of signal intensity versus arrival time distribution at the detector 106 for the fourth time period t₄, e.g., during the dwell time of the detector 106. As can be seen in the graph 134, the full resolution ion mobility data graph has three separate ion mobility peaks 136a-c, which indicates that multiple isomers are present within the same dwell time window. This is relevant to IMS devices that are implemented to separate ions based on mobility, e.g., temporal separation, such as the IMS device 104 shown in and described in connection with FIG. 2, which has an ion mobility separation path 124 that can have a length of 13 m and separate ions based on mobility, thus forming ion mobility peaks having widths from about 3-10 ms depending on separation parameters. In particular, since the ion mobility peaks have widths that are much smaller than the dwell time, the detector 106 can capture multiple ion mobility peaks within the single dwell time.

As opposed to simply summing the pulses of the detector 106 for a dwell time, the high bandwidth data acquisition system 108 monitors and captures the time dependent ion signal to detect the actual ion mobility peak position and shape. This is achieved by implementing a high bandwidth data acquisition system with the detector 106 and integrating ion counts over shorter periods within the longer dwell time. For example, the detector 106 can acquire data, e.g., detect ions, during a dwell time and the high bandwidth data acquisition system 108 can divide the dwell time into a smaller number of periods, sum the ion counts for each of those periods, and generate a profile based on the ion counts for each period within the dwell time. For a system that generates ion mobility peaks that are 3 ms wide and targets 10 points across the peak, the high bandwidth data acquisition system 108 would require a bandwidth greater than approximately 1 kHz or integration step sizes of approximately 300 µs. That is, for example, if the detector 106 has a dwell time of 3 ms, then the high bandwidth data acquisition system 108 divides the 3 ms dwell time into ten periods of 300 µs and sums the pulses detected by the detector 106 for each of those 300 µs periods to obtain ten separate data points representative of the full ion mobility peak. The high bandwidth data acquisition system 108 can then form a profile from the ten separate data points. Alternatively, the high bandwidth data acquisition system 108 can receive and record the raw output/signal of the detector 106. For example, the ion mobility peaks can be viewed on an oscilloscope that receives the raw output of the detector 106, and the high bandwidth data acquisition system 108 can be a device that mimics the functionality of the oscilloscope or records the oscilloscope data. Still further, the high bandwidth data acquisition system 108 can be an analog-to-digital converter (ADC) having a resolution of 8 bits or greater that receives the analog signal from the detector 106 and directly records the analog signal.

As previously noted, the high bandwidth data acquisition system 108 can be a separate component or can be integrated into any one of the detector 106, the controller 112, or the computing device 114.

By monitoring and capturing the time dependent ion signal, the actual ion mobility peak position and shape can be detected and analyzed, as opposed to just the integrated number of ions contained within the window of an entire dwell time. Additionally, if multiple isomers are present within the same dwell time window, the present system is capable of differentiating and recording the different isomers, as opposed to grouping them together.

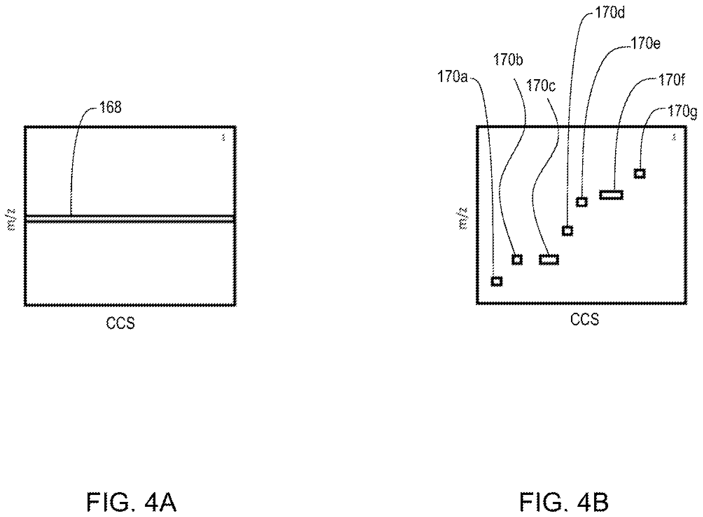

Additionally, as previously noted, the detector 106 is configured to detect ions of a particular mass-to-charge ratio, and all other ions, e.g., those having a different mass-to-charge ratio, are not detected by the detector 106. Accordingly, if the detector 106 is configured to detect a single mass-to-charge ratio over an extended time period, then it will record the full mobility profile 168 for the detected mass-to-charge ratio over that time period, as shown in FIG. 4A, which is a graph of mass-to-charge ratio (m/z) versus collision cross section (CCS) demonstrating targeted single ion mobility data collection.

However, if there are multiple analytes, then it may be desired to detect different mass-to-charge ratios for the ion mobility ranges, as shown in FIG. 4B, which is a graph of mass-to-charge ratio versus ion mobility demonstrating multi-analyte targeted IMS-MS data acquisition. As can be seen in FIG. 4B, a mobility profile 170a-g for each of the analytes having a different mass-to-charge ratio is detected by the detector 106 and plotted. Generally, to conduct the multi-analyte targeted IMS-MS data acquisition, the mass-to-charge ratio and ion mobility for the analytes being detected must be known, and at specific time periods, e.g., the ion arrival time, the detector 106 is switched to detect the mass-to-charge ratio of the ions that are known to arrive at the detector 106 at that time. The detector 106 can be switched multiple times to detect multiple different mass-to-charge ratios at different arrival times. This allows a plurality of different ions to be detected in the span of a single ion mobility separation.

To achieve the foregoing, the computing device 114 can determine the arrival time for each specific ion based on the known ion mobility value, the known mass-to-charge ratio, and the details/attributes/configuration of the IMS device 104, e.g., the separation path length, the signal being applied thereto, the separation time, the onboard accumulation time, etc. For example, the computing device 114 can have a stored table that includes a list of ions, the mass-to-charge ratio of each ion, the mobility/CCS of each ion, and the calculated arrival time for each ion. The controller 112 can then step the detector 106 through the table and configure the detector 106 to detect the appropriate mass-to-charge ratio at the appropriate arrival time, and make sure that the data was recorded for that table. This can be performed multiple times, e.g., over multiple mobility separations, to complete an entire 2D plot and to better refine the data. Accordingly, the system 100 synchronizes the ion mobility and the mass spectrometry data.

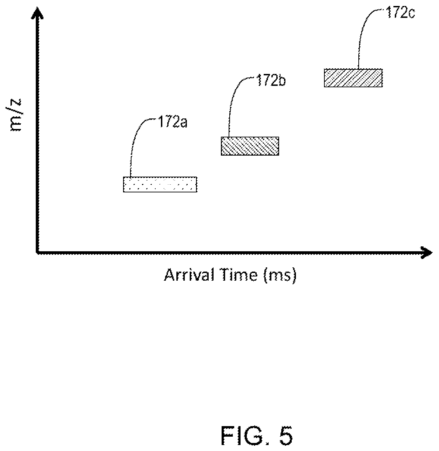

This technique can be implemented to detect ions having different mass-to-charge ratios where those ions also have different arrival times, as shown in FIG. 5, which is a graph of mass-to-charge ratio versus arrival time showing the activation time of the detector 106 detecting ions at three different mass-to-charge ratios at three different arrival times. As can be seen in FIG. 5, the detector 106 is activated for a first detection time period 172a to detect a first mass-to-charge ratio, a second detection time period 172b to detect a second mass-to-charge ratio, and a third detection time period 172c to detect a third mass-to-charge ratio. Additionally, since the detection time periods 172a-c are sufficiently spaced apart, the detector 106 (e.g., mass spectrometer) has sufficient time to switch from detecting one mass-to-charge ratio to detecting the next mass-to-charge ratio. For example, it may take 3 ms for the detector 106 to switch from detecting a first mass-to-charge ratio to a second different mass-to-charge ratio. Therefore, the detector 106 will not switch in time if the ion arrival times are too close together. Thus, the detector 106 is able to detect a plurality of different ions in the span of a single ion mobility separation.

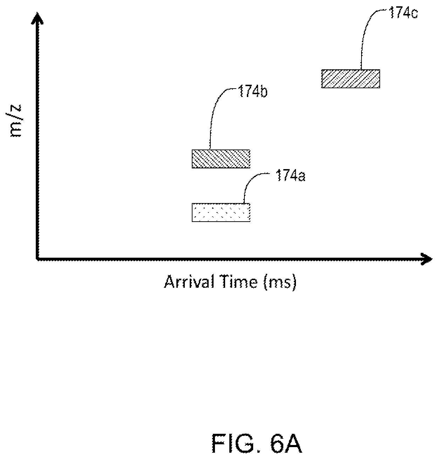

However, for some ion mobility separations two different ions can have different mass-to-charge ratios, but similar mobilities such that they arrive at the detector 106 in close proximity to each other. In such instances, the detector 106 is able to detect only one of the mass-to-charge ratios during the arrival time of both ions, and therefore the ion having the mass-to-charge ratio that is not being detected will be eliminated while the other mass-to-charge ratio will be plotted. This is shown, for example, in FIG. 6A, which is graph of mass-to-charge ratio versus arrival time showing activation times of the detector 106 detecting ions at three different mass-to-charge ratios with two of the ions having the same arrival times.

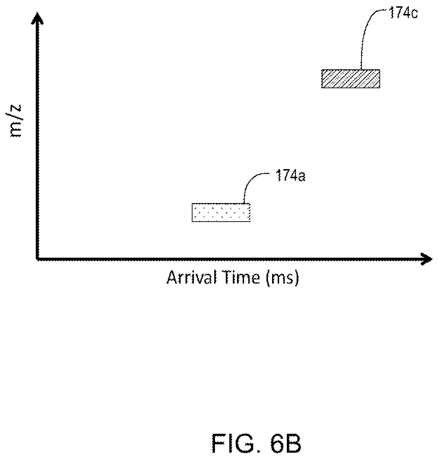

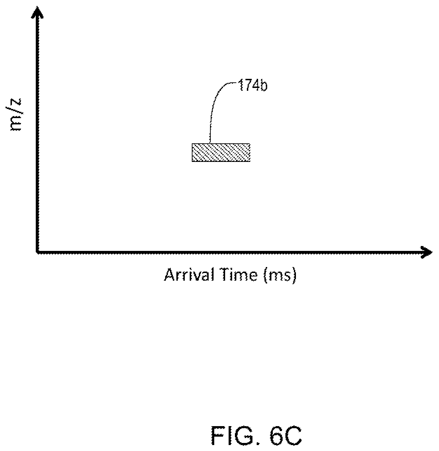

As can be seen in FIG. 6A, the detector 106 is activated for a first detection time period 174a to detect a first mass-to-charge ratio, a second detection time period 174b to detect a second mass-to-charge ratio, and a third detection time period 174c to detect a third mass-to-charge ratio. However, since the first and second detection time periods 174a, 174b overlap, the detector 106 is not able to detect both of the corresponding mass-to-charge ratios during the same scan, e.g., for the same ion mobility separation. Accordingly, to detect all of the desired ions, the mass-to-charge ratios are separated into two separate groups, and are detected over two separate scans. For example, the detector can perform a first scan where it detects for the first and third time periods 174a, 174c, as shown in FIG. 6B, and a second scan where it detects for the second time period 174b, as shown in FIG. 6C. In particular, the second time period 174b is scanned separately from the first time period 174a because of the overlapping arrival times. The data plots of the first and second scans can be combined to form a full data plot, e.g., as shown in FIG. 6A. It should be understood that the controller 112 or computing device 114 can separate the mass-to-charge ratios into as many scans as needed to obtain a full scan.

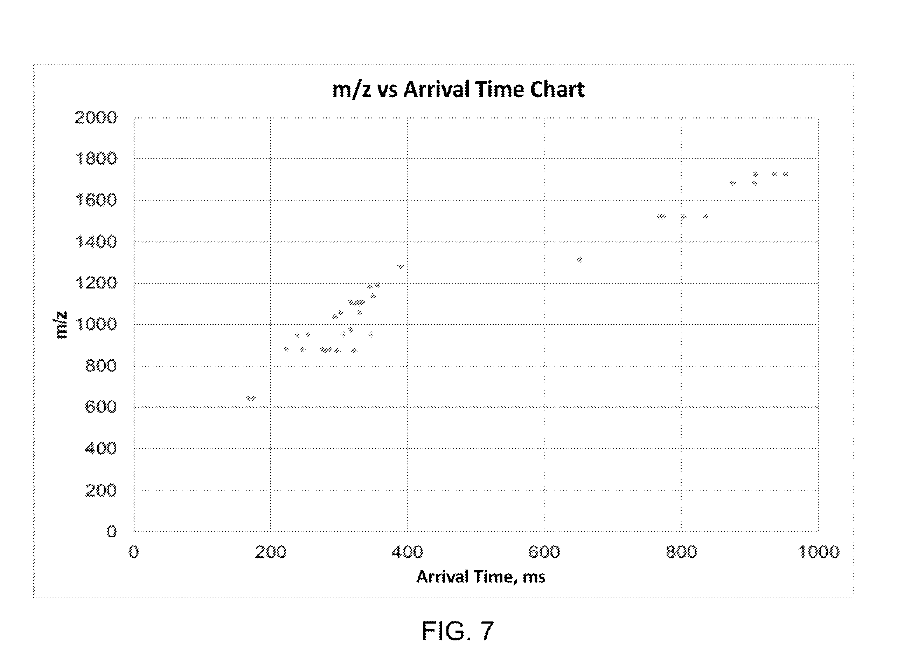

FIG. 7 is a graph of mass-to-charge ratio versus arrival time for the sample glycan data provided in Table A.

**TABLE A**

| Explicit Arrival time (ms) | Target m/z | FWHM (ms) |
|---|---|---|
| 280.15 | 873.8 | 2.449 |
| 296.66 | 873.8 | 4.082 |
| 321.78 | 873.8 | 2.449 |
| 317.12 | 975.4 | 3.266 |
| 245.88 | 881.8 | 2.449 |
| 275.43 | 881.8 | 1.633 |
| 286.69 | 881.8 | 2.449 |
| 253.97 | 954.9 | 0.817 |
| 306.19 | 954.9 | 3.266 |
| 346.36 | 954.9 | 1.633 |
| 301.39 | 1056.4 | 4.082 |
| 329.20 | 1056.4 | 2.449 |
| 293.74 | 1035.9 | 4.082 |
| 356.16 | 1191.5 | 3.266 |
| 323.77 | 1100.4 | 2.449 |
| 329.89 | 1100.4 | 4.082 |
| 349.62 | 1137.4 | 0.817 |
| 316.95 | 1108.4 | 0.817 |
| 325.94 | 1108.4 | 1.633 |
| 334.1 | 1108.4 | 2.449 |
| 344.94 | 1181.4 | 2.449 |
| 389.65 | 1283.0 | 0.817 |
| 222.19 | 885.0 | 0.817 |
| 239.35 | 952.7 | 3.266 |
| 768.98 | 1521.5 | 4.082 |
| 771.81 | 1521.5 | 4.082 |
| 803.27 | 1521.5 | 4.082 |
| 835.68 | 1521.5 | 4.082 |
| 651.51 | 1318.0 | 4.082 |
| 167.48 | 644.2 | 1.633 |
| 174.68 | 644.2 | 2.449 |
| 874.58 | 1683.5 | 4.082 |
| 906.74 | 1683.5 | 4.082 |
| 908.78 | 1724.6 | 3.266 |
| 935.66 | 1724.6 | 4.082 |
| 952.05 | 1724.6 | 3.266 |

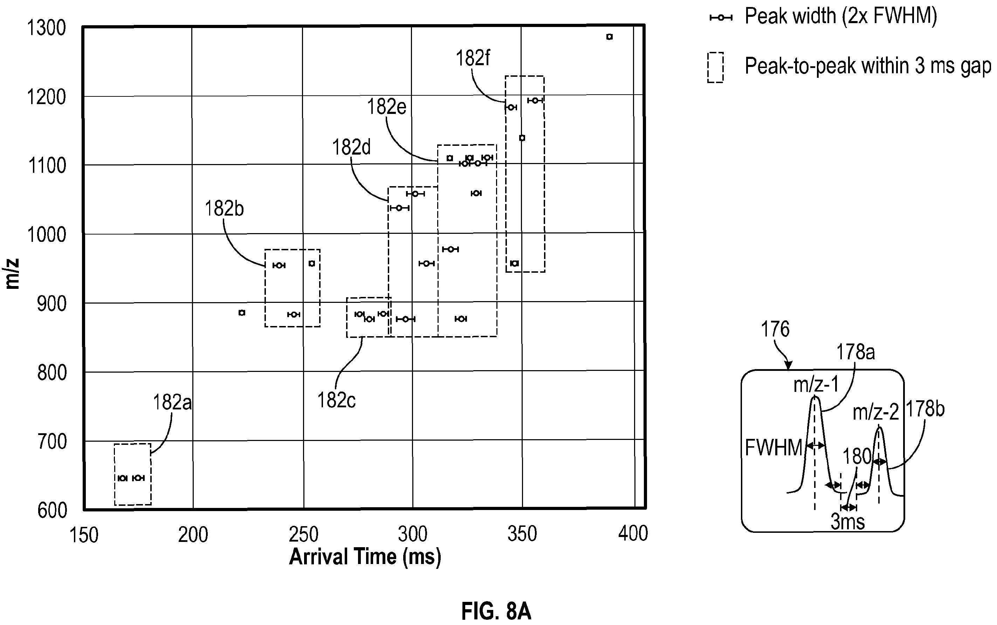

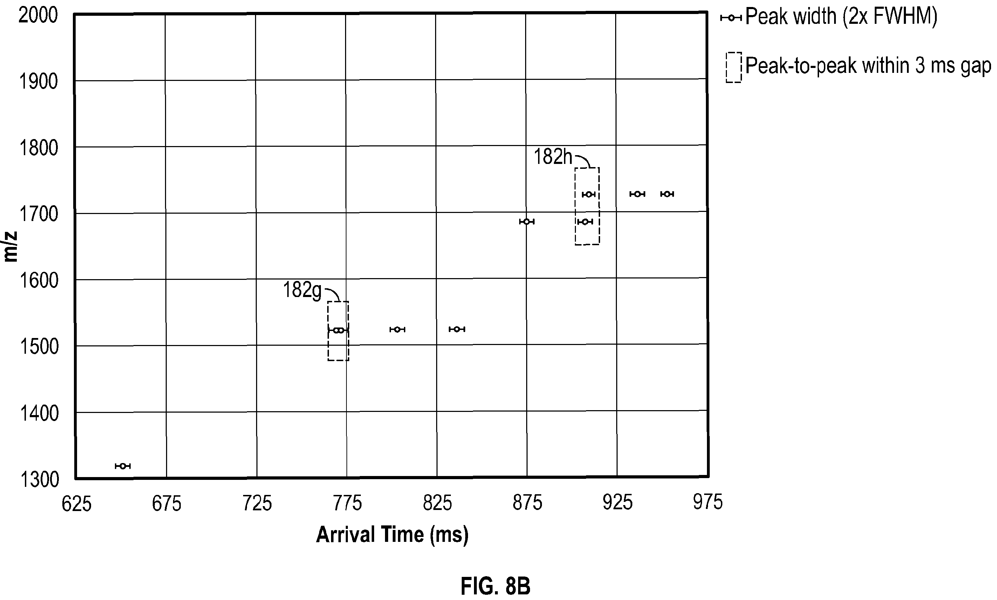

FIGS. 8A and 8B are detailed views of first and second portions of the graph of FIG. 7, respectively, showing the data in greater detail including peak widths and groupings of data having less than a 3 ms gap between peak widths. In particular, the peak width, e.g., two times the full width at half maximum (FWHM), for each ion is illustrated in FIGS. 8A and 8B. The detector 106 is maintained at the mass-to-charge ratio for the desired ions to be detected for the entirety of the peak width before it is switched to a different mass-to-charge ratio. That is, the detector 106 detects ions of a first desired mass-to-charge for a first time period and then switches to detecting ions of a second mass-to-charge ratio for a second time period. Additionally, there must be greater than a minimum switching time period, e.g., more than 3 ms, between the peak width of a first ion and the peak width of a second ion for the detector 106 to switch to detecting the second different mass-to-charge ratio in time. For example, this is shown in the exemplary insert 176 of FIG. 8A, which shows a first signal profile 178a for a first ion having a first mass-to-charge ration m/z-1 separated from a second signal profile 178b for a second ion having a second mass-to-charge ration m/z-2 by a switching time period 180. The switching time period 180 can be determined based on the capabilities of the detector 106 being utilized, and can be, for example, 3 ms. However, it should be understood that the time period for which the detector 106 detects each mass-to-charge ratio can be based on other factors or can be a set time period, as opposed to being based on the peak width.

FIGS. 8A and 8B include a plurality of groupings 182a-h, illustrated as dashed boxes, that each group a plurality of ions that have less than the switching time period 180 between respective peak widths or predetermined detection windows. In many instances this signifies that all of the ions within the grouping 182a-h cannot be detected in a single scan, and, therefore, one or more of the ions within each of the groupings 182a-h should be detected in different scans. However, in some instances, ions having less than the switching time period 180 between peak widths can still be detected in the same scan. For example, the two ions in the first grouping 182a, as well as the two ions in the seventh grouping 182g, can be detected in the same scan despite having a different mobility, and therefore arrival time, because they have the same mass-to-charge ratio. Accordingly, the detector 106 need not switch between detecting different mass-to-charge ratios. Additionally, while temporally adjacent ions within a single grouping 182a-h may have an insufficient switching time period 180 between peak widths, such ions may have a sufficient switching time period 180 between peak widths of other ions within the same grouping 182a-h such that they can be detected in the same scan.

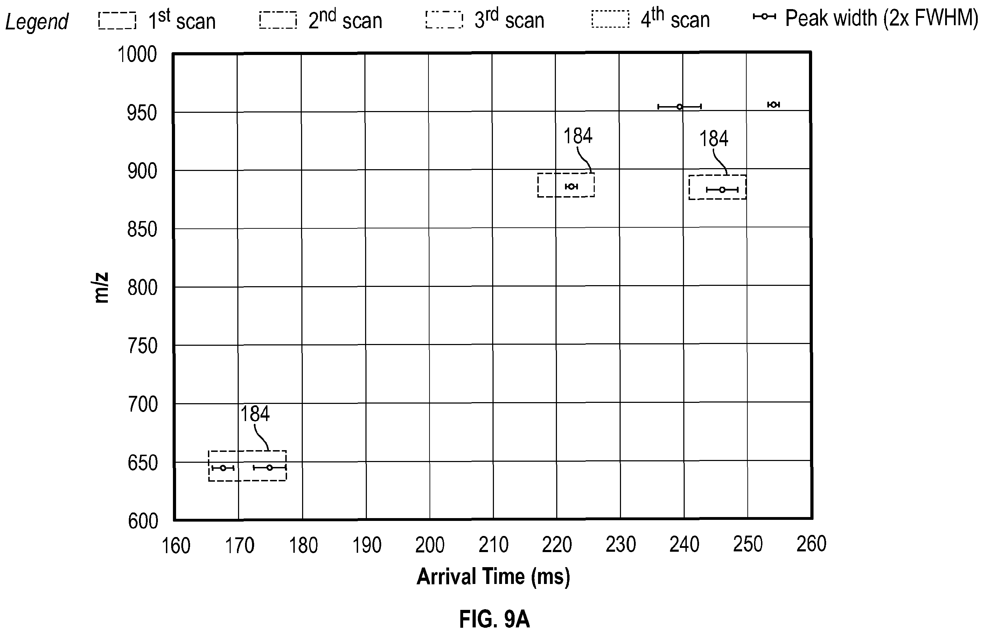

To ensure that all desired ions are scanned, the computing device 114 analyzes the known data, e.g., the information in Table A, and groups the ions into the smallest number of groups where all ions in the same group can be detected in the same scan. For example, the ions of Table A can be grouped into four separate groups, with each group requiring its own scan, as shown in FIGS. 9A-C, 10A-C, 11A-C, 12A-C, and 13A-C.

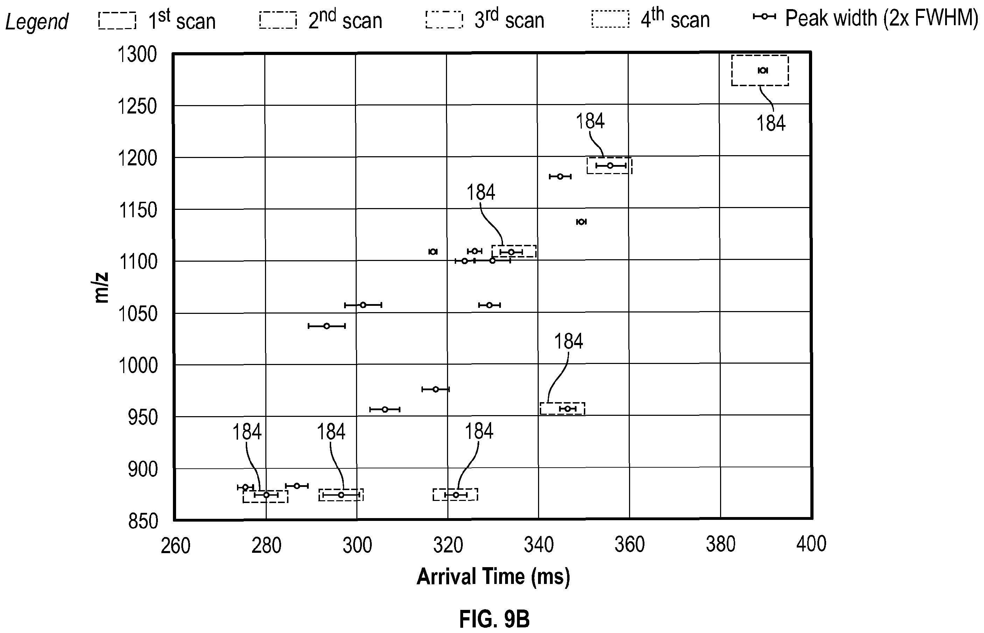

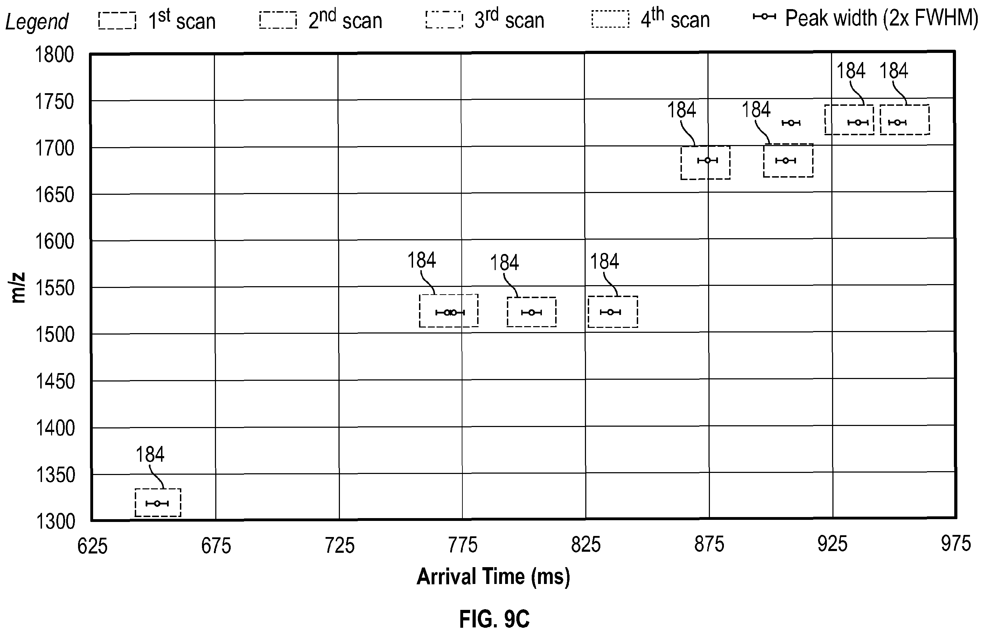

FIGS. 9A-C are detailed views of the graph of FIG. 7 identifying the data captured by a first scan of the detector 106 in first dashed boxes 184. FIG. 9A is a first portion of the graph of FIG. 7 showing the data for an arrival time range of 160 ms to 260 ms, FIG. 9B is a second portion of the graph of FIG. 7 showing the data for an arrival time range of 260 ms to 400 ms, and FIG. 9C is a third portion of the graph of FIG. 7 showing the data for an arrival time range of 625 ms to 975 ms. As can be seen in FIGS. 9A-C, all of the ions within the first dashed boxes 184 have an arrival time between peak width that is greater than the required switching time period 180.

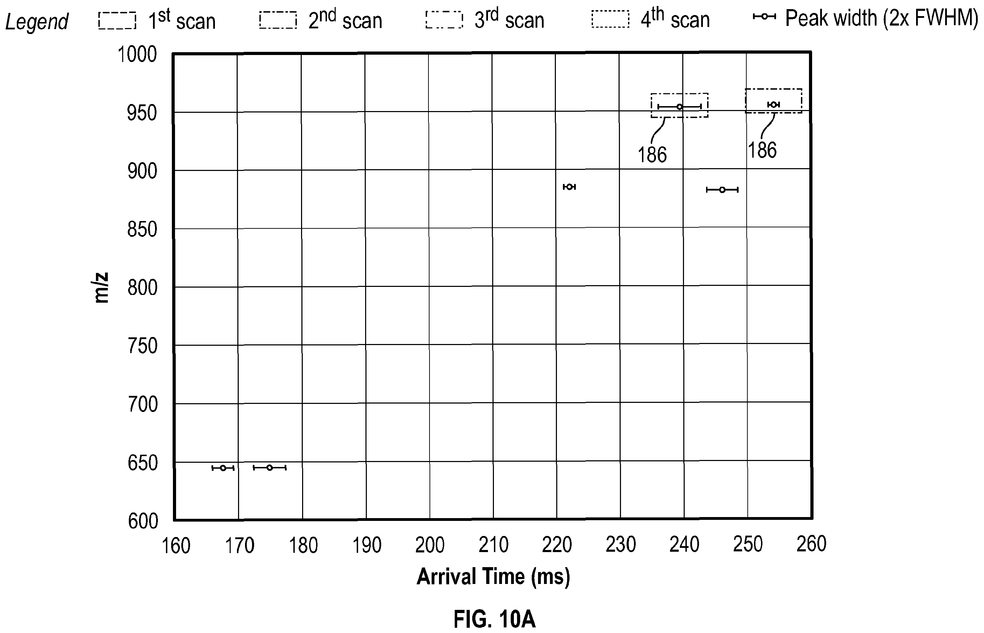

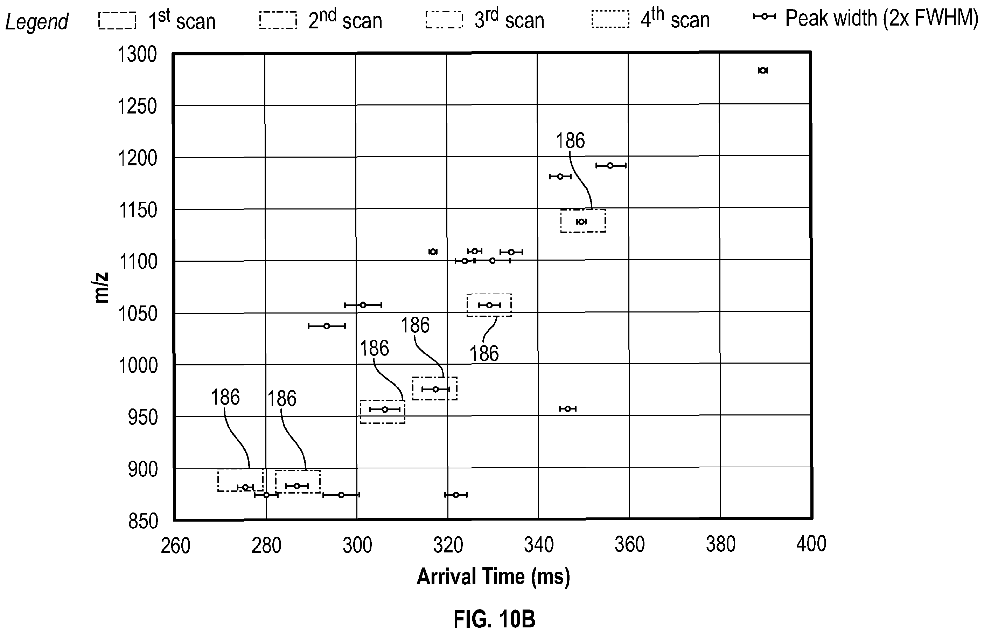

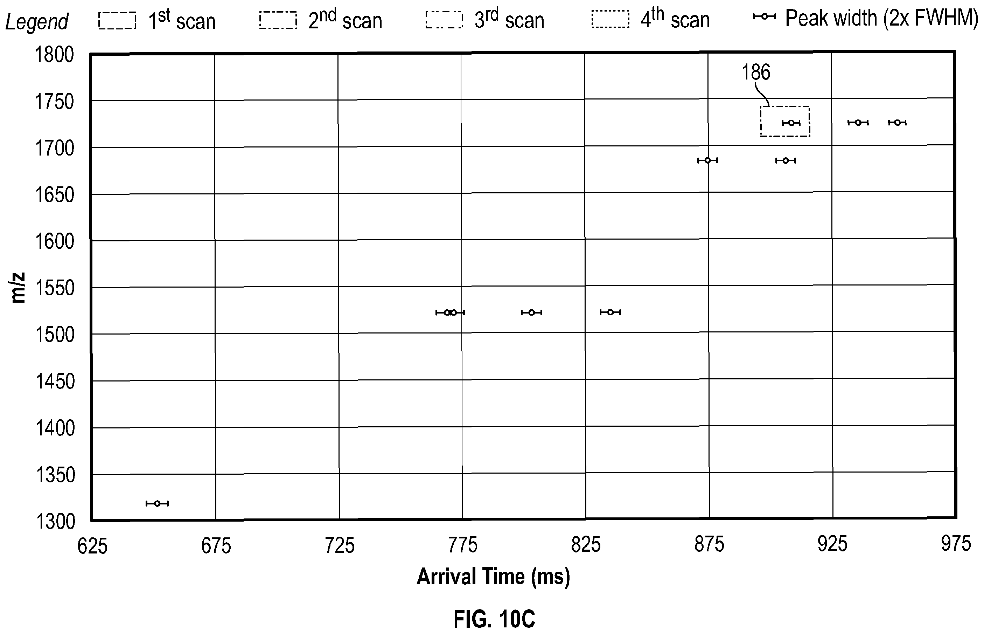

FIGS. 10A-C are detailed views of the graph of FIG. 7 identifying the data captured by a second scan of the detector 106 in second dashed boxes 186. FIG. 10A is a first portion of the graph of FIG. 7 showing the data for an arrival time range of 160 ms to 260 ms, FIG. 10B is a second portion of the graph of FIG. 7 showing the data for an arrival time range of 260 ms to 400 ms, and FIG. 10C is a third portion of the graph of FIG. 7 showing the data for an arrival time range of 625 ms to 975 ms. As can be seen in FIGS. 10A-C, all of the ions within the second dashed boxes 186 have an arrival time between peak width that is greater than the required switching time period 180.

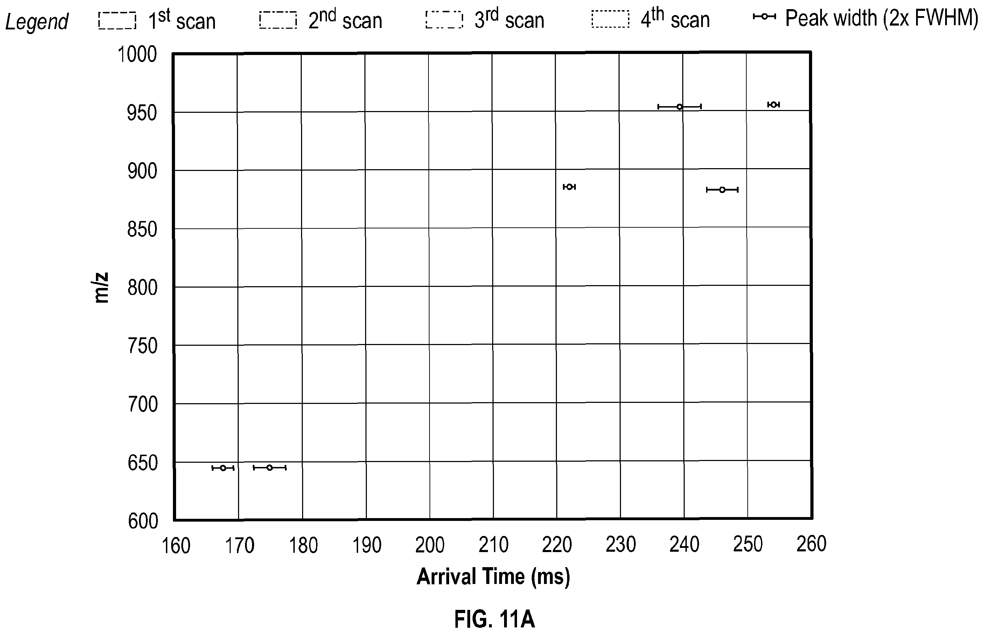

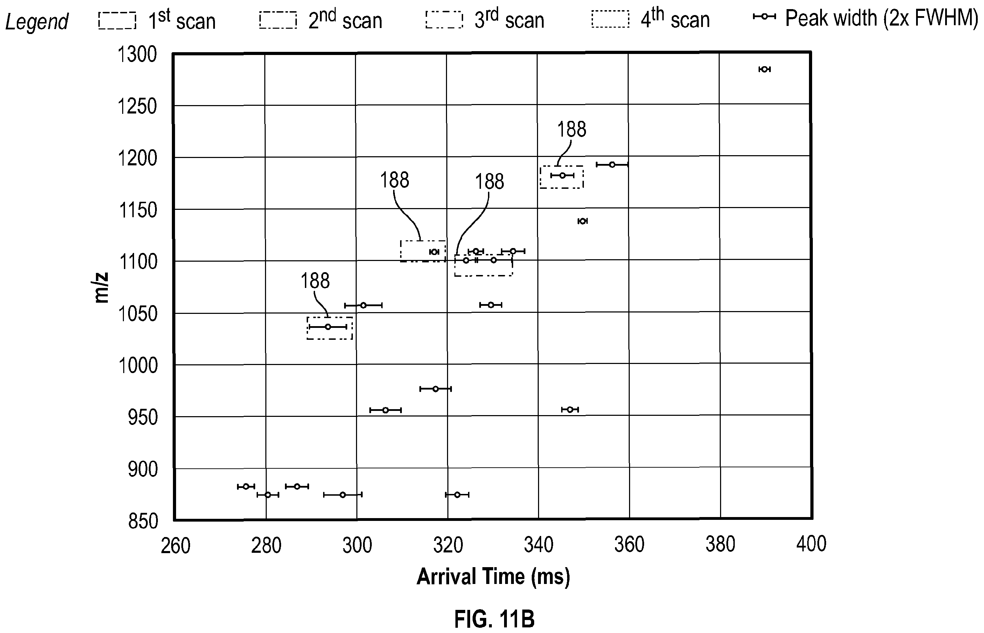

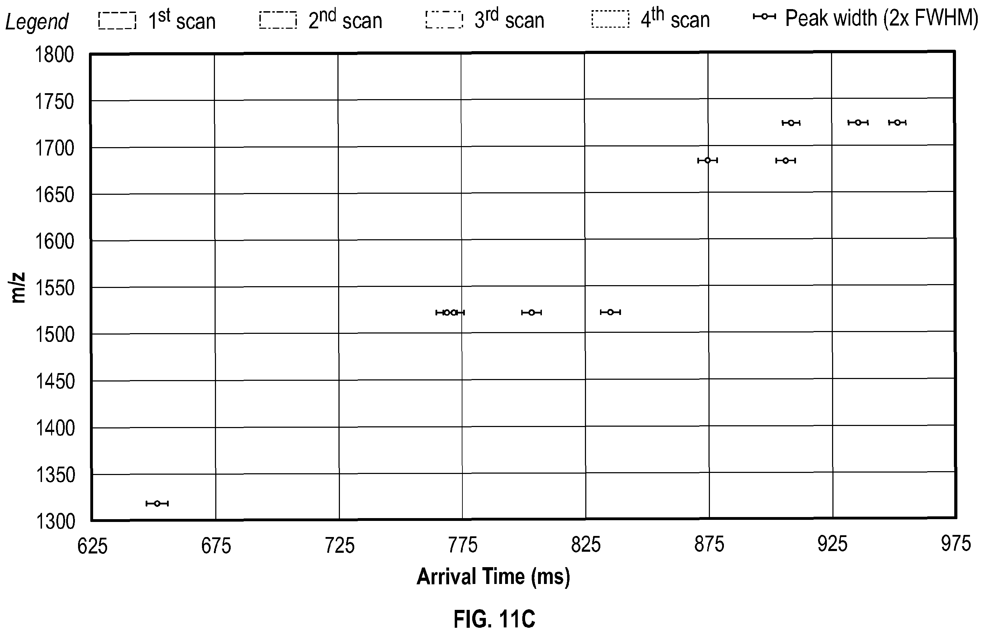

FIGS. 11A-C are detailed views of the graph of FIG. 7 identifying the data captured by a third scan of the detector 106 in third dashed boxes 188. FIG. 11A is a first portion of the graph of FIG. 7 showing the data for an arrival time range of 160 ms to 260 ms, FIG. 11B is a second portion of the graph of FIG. 7 showing the data for an arrival time range of 260 ms to 400 ms, and FIG. 11C is a third portion of the graph of FIG. 7 showing the data for an arrival time range of 625 ms to 975 ms. As can be seen in FIGS. 11A-C, all of the ions within the third dashed boxes 188 have an arrival time between peak width that is greater than the required switching time period 180. Additionally, as shown in FIGS. 11A and 11C, the detector 106 is not required to perform any scans for the arrival time ranges of 160 ms to 260 ms and 625 ms to 975 ms, because all of the ions within those arrival time ranges were able to be detected during the first and second scans, as shown in FIGS. 9A, 9C, 10A, and 10C.

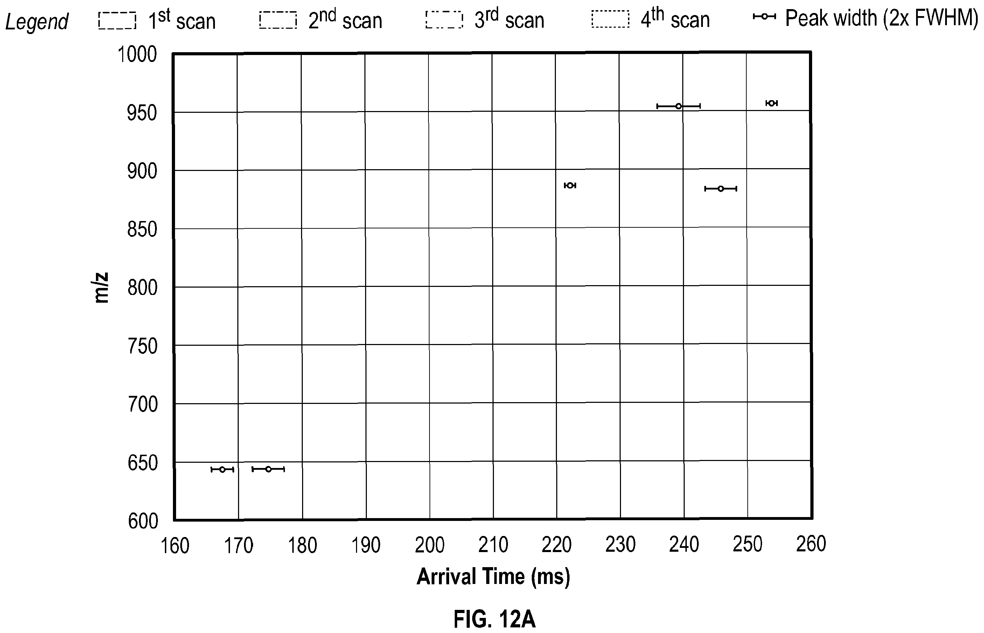

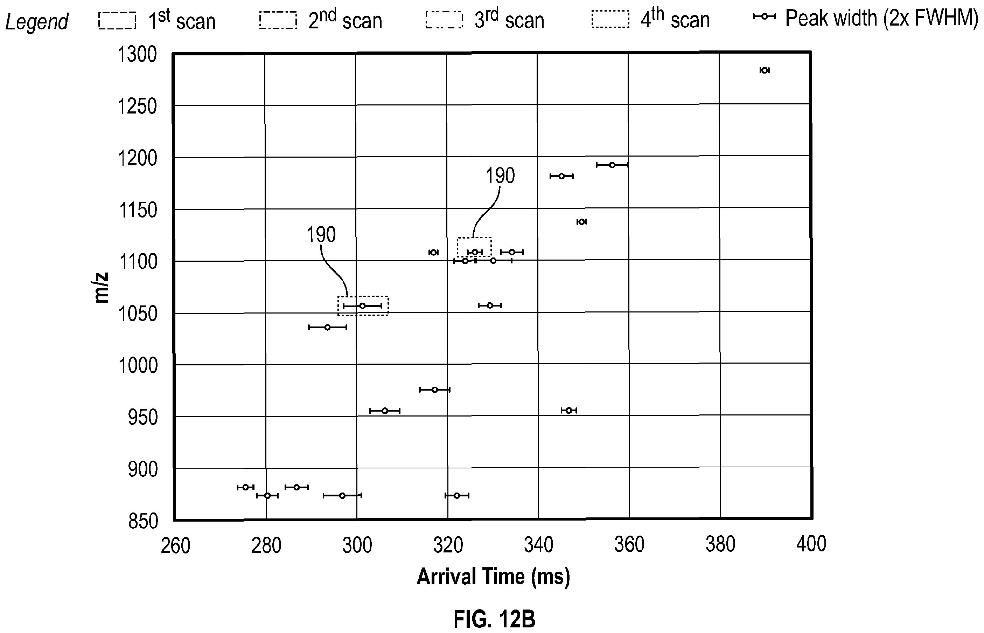

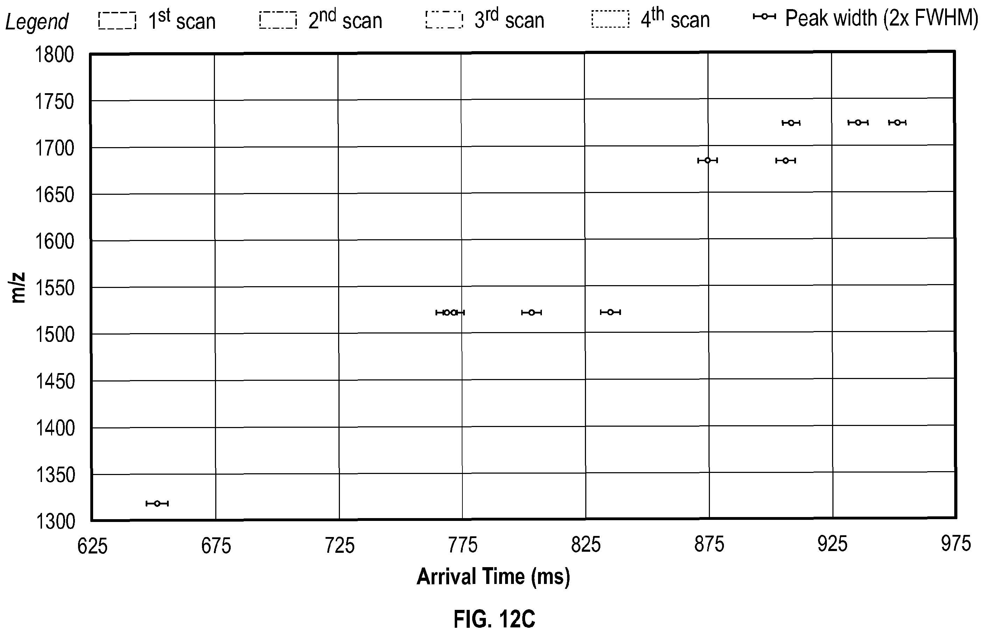

FIGS. 12A-C are detailed views of the graph of FIG. 7 identifying the data captured by a fourth scan of the detector 106 in fourth dashed boxes 190. FIG. 12A is a first portion of the graph of FIG. 7 showing the data for an arrival time range of 160 ms to 260 ms, FIG. 12B is a second portion of the graph of FIG. 7 showing the data for an arrival time range of 260 ms to 400 ms, and FIG. 12C is a third portion of the graph of FIG. 7 showing the data for an arrival time range of 625 ms to 975 ms. As can be seen in FIGS. 12A-C, all of the ions within the fourth dashed boxes 190 have an arrival time between peak widths that is greater than the required switching time period 180. Additionally, as shown in FIGS. 12A and 12C, the detector 106 is not required to perform any scans for the arrival time ranges of 160 ms to 260 ms and 625 ms to 975 ms, because all of the ions within those arrival time ranges were able to be detected during the first and second scans, as shown in FIGS. 9A, 9C, 10A, and 10C.

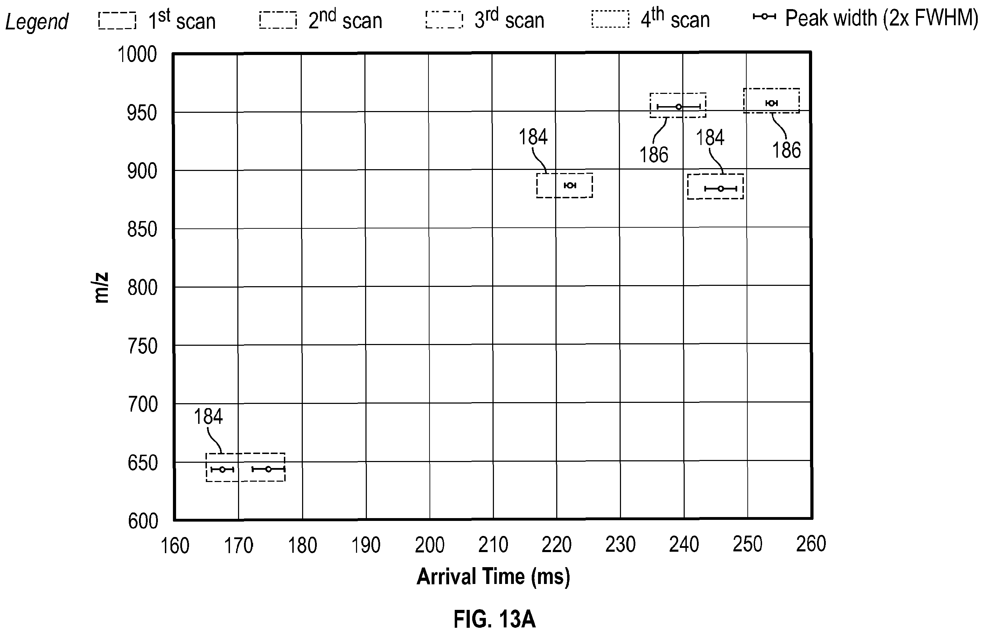

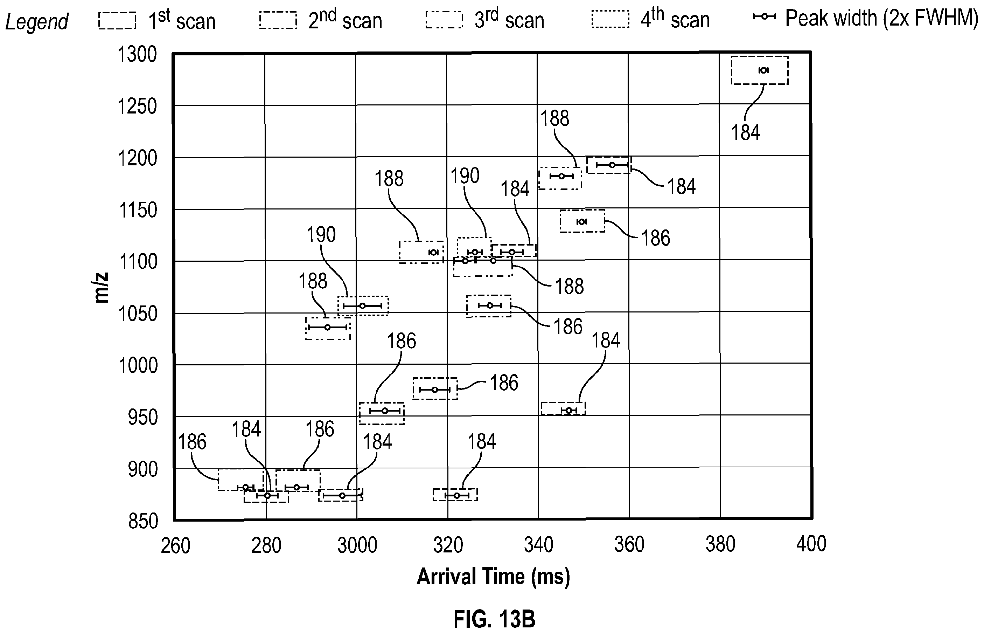

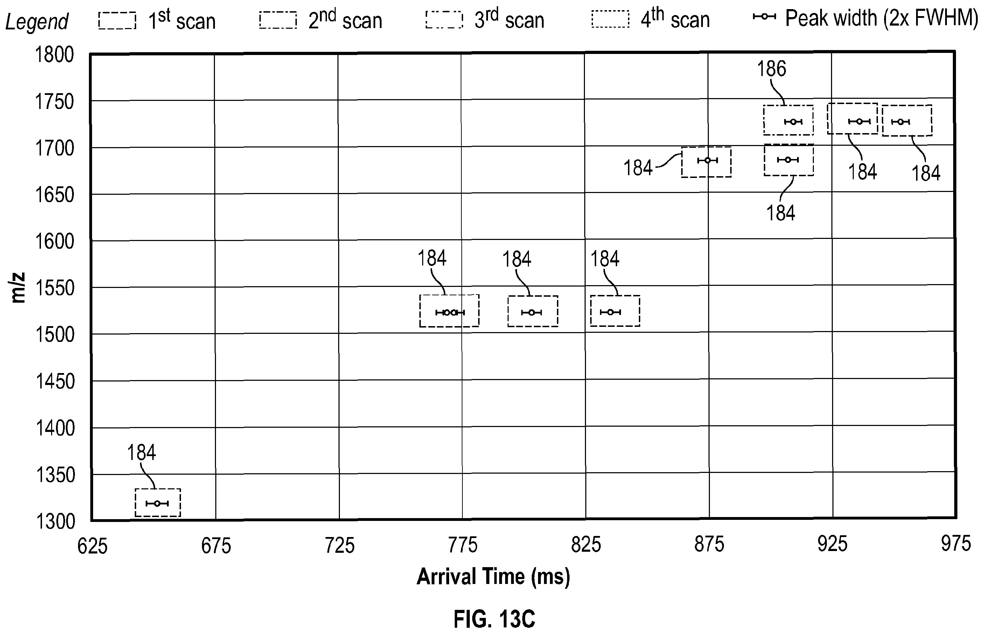

FIGS. 13A-C are detailed views of the graph of FIG. 7 identifying the data captured by all four scans of the detector 106 in first, second, third, and fourth dashed boxes 184, 186, 188, 190. FIG. 13A is a first portion of the graph of FIG. 7 showing the data for an arrival time range of 160 ms to 260 ms, FIG. 13B is a second portion of the graph of FIG. 7 showing the data for an arrival time range of 260 ms to 400 ms, and FIG. 13C is a third portion of the graph of FIG. 7 showing the data for an arrival time range of 625 ms to 975 ms.

In operation, the detector 106 performs the first scan on a first set of ions that have underwent ion mobility separation, e.g., a first packet of ions that are pulsed into the IMS device 104 and separated based on mobility, by switching between detecting the different pre-defined mass-to-charge ratios at the determined arrival times, e.g., the mass-to-charge ratios and the arrival times corresponding to the first dashed boxes 184 of FIGS. 9A-C and 13A-C. Next, the detector 106 performs the second scan on a second set of ions that have underwent ion mobility separation, e.g., a second packet of ions that are pulsed into the IMS device 104 after the first packet has been scanned and which are separated based on mobility, by switching between detecting the different pre-defined mass-to-charge ratios at the determined arrival times, e.g., the mass-to-charge ratios and the arrival times corresponding to the second dashed boxes 186 of FIGS. 10A-C and 13A-C. Subsequently, the detector 106 performs the third scan on a third set of ions that have underwent ion mobility separation, e.g., a third packet of ions that are pulsed into the IMS device 104 after the second packet has been scanned and which are separated based on mobility, by switching between detecting the different pre-defined mass-to-charge ratios at the determined arrival times, e.g., the mass-to-charge ratios and the arrival times corresponding to the third dashed boxes 188 of FIGS. 11A-C and 13A-C. Finally, the detector 106 performs the fourth scan on a fourth set of ions that have underwent ion mobility separation, e.g., a fourth packet of ions that are pulsed into the SLIM device 104 after the third packet has been scanned and which are separated based on mobility, by switching between detecting the different pre-defined mass-to-charge ratios at the determined arrival times, e.g., the mass-to-charge ratios and the arrival times corresponding to the fourth dashed boxes 190 of FIGS. 12A-C and 13A-C. The first, second, third, and fourth scans are then aggregated to generate a multi-analyte targeted IMS-MS data plot. Thus, the system 100 is capable of detecting a plurality of ions having different mass-to-charge ratios, and different or similar mobilities.

It should be understood that more or less than four scans can be performed on a group of ions depending on the mass-to-charge ratios, mobilities, and arrival times of the ions. Additionally, it should be understood that the detector 106 can be configured to detect certain ions multiple times in multiple scans in order to repeat the analysis of those ions and increase the acquisition rate and sensitivity for those analytes. For example, ions that were detected in the first scan can be detected again in the second, third, fourth, etc. scans if possible, e.g., if they do not overlap with the ions being detected in those scans and negatively impact detection thereof. As another example, all of the ions shown in FIGS. 13A and 13B that are detected in the first scan (shown in the first dashed boxes 184) can be detected a second time during the third scan (shown in the third dashed boxes 188) since none of those ions overlap the ions of the third scan.

Other embodiments are within the scope of the disclosed subject matter. One or more examples of these embodiments are illustrated in the accompanying drawings. Those skilled in the art will understand that the systems, devices, and methods specifically described herein and illustrated in the accompanying drawings are non-limiting exemplary embodiments and that the scope of the present disclosure is defined solely by the claims. The features illustrated or described in connection with one exemplary embodiment may be combined with the features of other embodiments. Such modifications and variations are intended to be included within the scope of the present disclosure. Further, in the present disclosure, like-named components of the embodiments generally have similar features, and thus within a particular embodiment each feature of each like-named component is not necessarily fully elaborated upon.

The subject matter described herein can be implemented in digital electronic circuitry, or in computer software, firmware, or hardware, including the structural means disclosed in this specification and structural equivalents thereof, or in combinations of them. The subject matter described herein can be implemented as one or more computer program products, such as one or more computer programs tangibly embodied in an information carrier (e.g., in a machine-readable storage device), or embodied in a propagated signal, for execution by, or to control the operation of, data processing apparatus (e.g., a programmable processor, a computer, or multiple computers). A computer program (also known as a program, software, software application, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file. A program can be stored in a portion of a file that holds other programs or data, in a single file dedicated to the program in question, or in multiple coordinated files (e.g., files that store one or more modules, sub-programs, or portions of code). A computer program can be deployed to be executed on one computer or on multiple computers at one site or distributed across multiple sites and interconnected by a communication network.

The processes and logic flows described in this specification, including the method steps of the subject matter described herein, can be performed by one or more programmable processors executing one or more computer programs to perform functions of the subject matter described herein by operating on input data and generating output. The processes and logic flows can also be performed by, and apparatus of the subject matter described herein can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processor of any kind of digital computer. Generally, a processor can receive instructions and data from a read-only memory or a random access memory or both. The essential elements of a computer are a processor for executing instructions and one or more memory devices for storing instructions and data. Generally, a computer can also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, (e.g., EPROM, EEPROM, and flash memory devices); magnetic disks, (e.g., internal hard disks or removable disks); magneto-optical disks; and optical disks (e.g., CD and DVD disks). The processor and the memory can be supplemented by, or incorporated in, special purpose logic circuitry.

To provide for interaction with a user, the subject matter described herein can be implemented on a computer having a display device, e.g., a CRT (cathode ray tube) or LCD (liquid crystal display) monitor, for displaying information to the user and a keyboard and a pointing device, (e.g., a mouse or a trackball), by which the user can provide input to the computer. Other kinds of devices can be used to provide for interaction with a user as well. For example, feedback provided to the user can be any form of sensory feedback, (e.g., visual feedback, auditory feedback, or tactile feedback), and input from the user can be received in any form, including acoustic, speech, or tactile input.

The techniques described herein can be implemented using one or more modules. As used herein, the term "module" refers to computing software, firmware, hardware, and/or various combinations thereof. At a minimum, however, modules are not to be interpreted as software that is not implemented on hardware, firmware, or recorded on a non-transitory processor readable recordable storage medium (i.e., modules are not software per se). Indeed "module" is to be interpreted to always include at least some physical, non-transitory hardware such as a part of a processor or computer. Two different modules can share the same physical hardware (e.g., two different modules can use the same processor and network interface). The modules described herein can be combined, integrated, separated, and/or duplicated to support various applications. Also, a function described herein as being performed at a particular module can be performed at one or more other modules and/or by one or more other devices instead of or in addition to the function performed at the particular module. Further, the modules can be implemented across multiple devices and/or other components local or remote to one another. Additionally, the modules can be moved from one device and added to another device, and/or can be included in both devices.

The subject matter described herein can be implemented in a computing system that includes a back-end component (e.g., a data server), a middleware component (e.g., an application server), or a front-end component (e.g., a client computer having a graphical user interface or a web browser through which a user can interact with an implementation of the subject matter described herein), or any combination of such back-end, middleware, and front-end components. The components of the system can be interconnected by any form or medium of digital data communication, e.g., a communication network. Examples of communication networks include a local area network ("LAN") and a wide area network ("WAN"), e.g., the Internet.

Approximating language, as used herein throughout the specification and claims, may be applied to modify any quantitative representation that could permissibly vary without resulting in a change in the basic function to which it is related. Accordingly, a value modified by a term or terms, such as "about" and "substantially," are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

## Claims

1. A system (100) for capturing full resolution ion mobility data, comprising:
an ion mobility separation device (104) configured to receive a stream of ions, guide at least a portion of the stream of ions through the ion mobility separation device (104), and separate the ions of the portion based on ion mobility;
an ion detector (106) configured to receive the portion of the stream of ions from the ion mobility separation device (104), detect ions having a predefined mass-to-charge ratio during a first time period (172a, 174a), and generate one or more signals in response to detection of ions having the predefined mass-to-charge ratio;
a data acquisition system (108) configured to receive the one or more signals from the ion detector (106) and generate a time dependent ion signal based on the one or more signals received from the ion detector (106), the time dependent ion signal being representative of an intensity of the one or more signals at a plurality of different arrival time periods during the first time period (172a, 174a); and
a controller (112) in communication with the ion mobility separation device (104), the ion detector (106), and the data acquisition system (108).

2. The system (100) of Claim 1, wherein the data acquisition system (108) is a high bandwidth data acquisition system.

3. The system (100) of Claim 2, wherein the high bandwidth data acquisition system is an analog-to-digital converter and the one or more signals generated by the ion detector (106) is an analog signal,
optionally wherein the analog-to-digital converter has a resolution of at least eight bits.

4. The system (100) of Claim 1, wherein the data acquisition system (108) is configured to separate the first time period (172a, 174a) into a plurality of sub-periods, separately sum the received one or more signals for each of the plurality of sub-periods, and generate the time dependent ion signal based on the sums and the plurality of sub-periods.

5. The system (100) of Claim 4, wherein the data acquisition system (108) has a bandwidth of greater than 1 kHz.

6. The system (100) of Claim 1, wherein the ion mobility separation device (104) is configured to generate a traveling drive potential that is configured to guide the ions through the ion mobility separation device (104) and separate the ions based on ion mobility.

7. The system (100) of Claim 1, wherein the ion mobility separation device (104) includes an accumulation region (120) and an ion mobility separation path (124), the accumulation region (120) configured to accumulate the ions into one or more ion packets and pulse the one or more ion packets into the ion mobility separation path (124).

8. A method for capturing full resolution ion mobility data, comprising:
introducing a stream of ions into an ion mobility separation device (104);
guiding, by the ion mobility separation device (104), at least a portion of the stream of ions through the ion mobility separation device (104) to an ion detector (106);
separating, by the ion mobility separation device (104), the ions of the portion based on ion mobility;
receiving, by the ion detector (106), the ions;
detecting, by the ion detector (106), ions having a predefined mass-to-charge ratio during a first time period (172a, 174a);
generating, by the ion detector (106), one or more signals in response to detection of ions having the predefined mass-to-charge ratio;
receiving, by a data acquisition system (108), the one or more signals from the ion detector (106); and
generating, by the data acquisition system (108), a time dependent ion signal based on the one or more signals received from the ion detector (106), the time dependent ion signal being representative of an intensity of the one or more signals at a plurality of different arrival time periods during the first time period (172a, 174a).

9. The method of Claim 8, comprising a controller in communication with the ion mobility separation device (104), the ion detector (106), and the data acquisition system (108).

10. The method of Claim 8, wherein the data acquisition system (108) is a high bandwidth data acquisition system.

11. The method of Claim 10, wherein the high bandwidth data acquisition system is an analog-to-digital converter and the one or more signals generated by the ion detector (106) is an analog signal,
optionally wherein the analog-to-digital converter has a resolution of at least eight bits.

12. The method of Claim 8, comprising:
separating, by the data acquisition system (108), the first time period (172a, 174a) into a plurality of sub-periods;
summing the received one or more signalss for each of the plurality of sub-periods separately; and
generating the time dependent ion signal based on the sums and the plurality of sub-periods.

13. The method of Claim 12, wherein the data acquisition system (108) has a bandwidth of greater than 1 kHz.

14. The method of Claim 8, comprising:
generating, by the ion mobility separation device (104), a traveling drive potential that guides the ions through the ion mobility separation device (104) and separates the ions based on ion mobility.

15. The method of Claim 8, wherein the ion mobility separation device (104) includes an accumulation region (120) and an ion mobility separation path (124), the accumulation region (120) configured to accumulate the ions into one or more ion packets and pulse the one or more ion packets into the ion mobility separation path (124).

## Patentansprüche

1. System (100) zum Erfassen von lonenmobilitätsdaten in voller Auflösung, umfassend:
eine lonenmobilitätstrennvorrichtung (104), die konfiguriert ist, einen Ionenstrom zu empfangen, zumindest einen Teil des Ionenstroms durch die lonenmobilitätstrennvorrichtung (104) zu leiten und die Ionen des Teils basierend auf lonenmobilität zu trennen;
einen Ionendetektor (106), der konfiguriert ist, den Teil des Ionenstroms von der lonenmobilitätstrennvorrichtung (104) zu empfangen, Ionen mit einem vordefinierten Masse-Ladungs-Verhältnis während eines ersten Zeitraums (172a, 174a) zu detektieren und ein oder mehrere Signale als Antwort auf die Detektion von Ionen mit dem vordefinierten Masse-Ladungs-Verhältnis zu erzeugen;
ein Datenerfassungssystem (108), das konfiguriert ist, das eine oder die mehreren Signale von dem Ionendetektor (106) zu empfangen und ein zeitabhängiges lonensignal basierend auf dem einen oder den mehreren von dem Ionendetektor (106) empfangenen Signalen zu erzeugen, wobei das zeitabhängige lonensignal repräsentativ für eine Intensität des einen oder der mehreren Signale zu einer Mehrzahl unterschiedlicher Ankunftszeiträume während des ersten Zeitraums (172a, 174a) ist; und
einen Controller (112), der mit der lonenmobilitätstrennvorrichtung (104), dem Ionendetektor (106) und dem Datenerfassungssystem (108) in Kommunikation bzw. Verbindung ist.

2. System (100) nach Anspruch 1, wobei das Datenerfassungssystem (108) ein Datenerfassungssystem mit hoher Bandbreite ist.

3. System (100) nach Anspruch 2, wobei das Datenerfassungssystem mit hoher Bandbreite ein Analog-Digital-Wandler ist und das eine oder die mehreren von dem Ionendetektor (106) erzeugten Signale ein Analogsignal ist bzw. sind, wobei optional der Analog-Digital-Wandler eine Auflösung von zumindest acht Bit aufweist.

4. System (100) nach Anspruch 1, wobei das Datenerfassungssystem (108) konfiguriert ist, den ersten Zeitraum (172a, 174a) in eine Mehrzahl von Teilzeiträumen zu unterteilen, das empfangene eine oder die mehreren Signale für jeden der Mehrzahl von Teilzeiträumen separat aufzusummieren und das zeitabhängige lonensignal basierend auf den Summen und der Mehrzahl von Teilzeiträumen zu erzeugen.

5. System (100) nach Anspruch 4, wobei das Datenerfassungssystem (108) eine Bandbreite von mehr als 1 kHz aufweist.

6. System (100) nach Anspruch 1, wobei die lonenmobilitätstrennvorrichtung (104) konfiguriert ist, ein wanderndes Antriebspotenzial zu erzeugen, das konfiguriert ist, die Ionen durch die lonenmobilitätstrennvorrichtung (104) zu leiten und die Ionen basierend auf lonenmobilität zu trennen.

7. System (100) nach Anspruch 1, wobei die lonenmobilitätstrennvorrichtung (104) einen Akkumulationsbereich (120) und einen lonenmobilitätstrennweg (124) beinhaltet, wobei der Akkumulationsbereich (120) konfiguriert ist, die Ionen zu einem oder mehreren Ionenpaketen zu akkumulieren und das eine oder die mehreren Ionenpakete in den lonenmobilitätstrennweg (124) zu pulsieren bzw. impulsartig einzuspeisen.

8. Verfahren zum Erfassen von lonenmobilitätsdaten in voller Auflösung, umfassend:
Einbringen eines Ionenstroms in eine lonenmobilitätstrennvorrichtung (104);
Leiten, durch die lonenmobilitätstrennvorrichtung (104), zumindest eines Teils des Ionenstroms durch die lonenmobilitätstrennvorrichtung (104) zu einem Ionendetektor (106);
Trennen, durch die lonenmobilitätstrennvorrichtung (104), der Ionen des Teils basierend auf lonenmobilität;
Empfangen, durch den Ionendetektor (106), der Ionen;
Detektieren, durch den Ionendetektor (106), von Ionen mit einem vordefinierten Masse-Ladungs-Verhältnis während eines ersten Zeitraums (172a, 174a);
Erzeugen, durch den Ionendetektor (106), eines oder mehrerer Signale als Antwort auf die Detektion von Ionen mit dem vordefinierten Masse-Ladungs-Verhältnis;
Empfangen, durch ein Datenerfassungssystem (108), des einen oder der mehreren Signale von dem Ionendetektor (106); und
Erzeugen, durch das Datenerfassungssystem (108), eines zeitabhängigen lonensignals basierend auf dem einen oder den mehreren von dem Ionendetektor (106) empfangenen Signalen, wobei das zeitabhängige lonensignal repräsentativ für eine Intensität des einen oder der mehreren Signale zu einer Mehrzahl unterschiedlicher Ankunftszeiträume während des ersten Zeitraums (172a, 174a) ist.

9. Verfahren nach Anspruch 8, umfassend einen Controller, der mit der lonenmobilitätstrennvorrichtung (104), dem Ionendetektor (106) und dem Datenerfassungssystem (108) in Kommunikation bzw. Verbindung ist.

10. Verfahren nach Anspruch 8, wobei das Datenerfassungssystem (108) ein Datenerfassungssystem mit hoher Bandbreite ist.

11. Verfahren nach Anspruch 10, wobei das Datenerfassungssystem mit hoher Bandbreite ein Analog-Digital-Wandler ist und das eine oder die mehreren von dem Ionendetektor (106) erzeugten Signale ein Analogsignal ist,
wobei optional der Analog-Digital-Wandler eine Auflösung von zumindest acht Bit aufweist.

12. Verfahren nach Anspruch 8, umfassend:
Unterteilen, durch das Datenerfassungssystem (108), des ersten Zeitraums (172a, 174a) in eine Mehrzahl von Teilzeiträumen;
Aufsummieren des empfangenen einen oder der mehreren Signale für jeden der Mehrzahl von Teilzeiträumen separat; und
Erzeugen des zeitabhängigen lonensignals basierend auf den Summen und der Mehrzahl von Teilzeiträumen.

13. Verfahren nach Anspruch 12, wobei das Datenerfassungssystem (108) eine Bandbreite von mehr als 1 kHz aufweist.

14. Verfahren nach Anspruch 8, umfassend:
Erzeugen, durch die lonenmobilitätstrennvorrichtung (104), eines wandernden Antriebspotenzials, das die Ionen durch die lonenmobilitätstrennvorrichtung (104) leitet und die Ionen basierend auf lonenmobilität trennt.

15. Verfahren nach Anspruch 8, wobei die lonenmobilitätstrennvorrichtung (104) einen Akkumulationsbereich (120) und einen lonenmobilitätstrennweg (124) beinhaltet, wobei der Akkumulationsbereich (120) konfiguriert ist, die Ionen zu einem oder mehreren Ionenpaketen zu akkumulieren und das eine oder die mehreren Ionenpakete in den lonenmobilitätstrennweg (124) zu pulsieren bzw. impulsartig einzuspeisen.

## Revendications

1. Système (100) de capture de données de mobilité ionique à pleine résolution, comprenant :
un dispositif de séparation par mobilité ionique (104) configuré pour recevoir un flux d'ions, guider au moins une partie du flux d'ions à travers le dispositif de séparation par mobilité ionique (104), et séparer les ions de la partie en fonction de la mobilité ionique ;
un détecteur d'ions (106) configuré pour recevoir la partie du flux d'ions provenant du dispositif de séparation par mobilité ionique (104), détecter des ions ayant un rapport masse/charge prédéfini pendant une première période temporelle (172a, 174a), et générer un ou plusieurs signaux en réponse à la détection des ions ayant le rapport masse/charge prédéfini ;
un système d'acquisition de données (108) configuré pour recevoir lesdits un ou plusieurs signaux provenant du détecteur d'ions (106) et générer un signal ionique dépendant du temps basé sur lesdits un ou plusieurs signaux reçus depuis le détecteur d'ions (106), le signal ionique dépendant du temps étant représentatif d'une intensité desdits un ou plusieurs signaux sur une pluralité de différentes périodes temporelles d'arrivée pendant la première période temporelle (172a, 174a) ; et
un contrôleur (112) en communication avec le dispositif de séparation par mobilité ionique (104), le détecteur d'ions (106) et le système d'acquisition de données (108).

2. Système (100) de la revendication 1, dans lequel le système d'acquisition de données (108) est un système d'acquisition de données à large bande passante.

3. Système (100) de la revendication 2, dans lequel le système d'acquisition de données à large bande passante est un convertisseur analogique-numérique et lesdits un ou plusieurs signaux générés par le détecteur d'ions (106) est un signal analogique,
en option dans lequel le convertisseur analogique-numérique présente une résolution d'au moins huit bits.

4. Système (100) de la revendication 1, dans lequel le système d'acquisition de données (108) est configuré pour séparer la première période temporelle (172a, 174a) en une pluralité de sous-périodes, additionner séparément lesdits un ou plusieurs signaux reçus pour chacune de la pluralité des sous-périodes, et générer le signal ionique dépendant du temps basé sur les sommes et la pluralité de sous-périodes.

5. Système (100) de la revendication 4, dans lequel le système d'acquisition de données (108) présente une bande passante supérieure à 1 kHz.

6. Système (100) de la revendication 1, dans lequel le dispositif de séparation par mobilité ionique (104) est configuré pour générer un potentiel d'entraînement mobile qui est configuré pour guider les ions à travers le dispositif de séparation par mobilité ionique (104) et séparer les ions basés sur la mobilité ionique.

7. Système (100) de la revendication 1, dans lequel le dispositif de séparation par mobilité ionique (104) comprend une région d'accumulation (120) et un trajet de séparation par mobilité ionique (124), la région d'accumulation (120) configurée pour accumuler les ions en un ou plusieurs paquets d'ions et injecter par impulsions lesdits un ou plusieurs paquets d'ions dans le trajet de séparation par mobilité ionique (124).

8. Procédé de capture de données de mobilité ionique à pleine résolution, comprenant :
l'introduction d'un flux d'ions dans un dispositif de séparation par mobilité ionique (104) ;
le guidage, par le dispositif de séparation par mobilité ionique (104), d'au moins une partie du flux d'ions à travers le dispositif de séparation par mobilité ionique (104) vers un détecteur d'ions (106) ;
la séparation, par le dispositif de séparation par mobilité ionique (104), des ions de la partie en fonction de la mobilité ionique ;
la réception, par le détecteur d'ions (106), des ions ;
la détection, par le détecteur d'ions (106), des ions ayant un rapport masse/charge prédéfini pendant une première période temporelle (172a, 174a) ;
la génération, par le détecteur d'ions (106), d'un ou plusieurs signaux en réponse à la détection des ions ayant le rapport masse/charge prédéfini ;
la réception, par un système d'acquisition de données (108), desdits un ou plusieurs signaux provenant du détecteur d'ions (106) ; et
la génération, par le système d'acquisition de données (108), d'un signal ionique dépendant du temps basé sur lesdits un ou plusieurs signaux reçus depuis le détecteur d'ions (106), le signal ionique dépendant du temps étant représentatif d'une intensité desdits un ou plusieurs signaux sur une pluralité de différentes périodes temporelles d'arrivée pendant la première période temporelle (172a, 174a).

9. Procédé de la revendication 8, comprenant un contrôleur en communication avec le dispositif de séparation par mobilité ionique (104), le détecteur d'ions (106) et le système d'acquisition de données (108).

10. Procédé de la revendication 8, dans lequel le système d'acquisition de données (108) est un système d'acquisition de données à large bande passante.

11. Procédé de la revendication 10, dans lequel le système d'acquisition de données à large bande passante est un convertisseur analogique-numérique et lesdits un ou plusieurs signaux générés par le détecteur d'ions (106) est un signal analogique,
en option dans lequel le convertisseur analogique-numérique présente une résolution d'au moins huit bits.

12. Procédé de la revendication 8, comprenant :
la séparation, par le système d'acquisition de données (108), de la première période temporelle (172a, 174a) en une pluralité de sous-périodes ;
l'addition séparée desdits un ou plusieurs signaux reçus pour chacune de la pluralité des sous-périodes ; et
la génération du signal ionique dépendant du temps basé sur les sommes et la pluralité de sous-périodes.

13. Procédé de la revendication 12, dans lequel le système d'acquisition de données (108) présente une bande passante supérieure à 1 kHz.

14. Procédé de la revendication 8, comprenant :
la génération, par le dispositif de séparation par mobilité ionique (104), d'un potentiel d'entraînement mobile qui guide les ions à travers le dispositif de séparation par mobilité ionique (104) et sépare les ions en fonction de la mobilité ionique.

15. Procédé de la revendication 8, dans lequel le dispositif de séparation par mobilité ionique (104) comprend une région d'accumulation (120) et un trajet de séparation par mobilité ionique (124), la région d'accumulation (120) configurée pour accumuler les ions en un ou plusieurs paquets d'ions et injecter par impulsions lesdits un ou plusieurs paquets d'ions dans le trajet de séparation par mobilité ionique (124).
